# EUROPEAN PATENT APPLICATION

(11) **EP 4 368 003 A1**
(43) Date of publication of application: **15.05.2024**
(21) Application number: 23170188.9
(22) Date of filing: 26.04.2023
(51) Int. Cl.: A01D 34/00, G05D 1/00

(54) **ROBOTIC TOOL WITH BOUNDARY WIRE SENSORS**

(30) Priority: 27.04.2022 US 202263335554 P; 31.05.2022 US 202263347400 P
(71) Applicant: Techtronic Cordless GP, Anderson, SC 29621 (US)
(72) Inventor: LEE, Hei Man, Kwai Chung (CN); CHOI, Man Ho, Kwai Chung (CN); LI, Shing Hin, Kwai Chung (CN); LAI, Hok Sum Sam, Kwai Chung (CN); NG, Ho Lam, Kwai Chung (CN)
(74) Representative: Zimmermann & Partner Patentanwälte mbB

(57) **Abstract**

A robotic garden tool for use with a boundary wire producing an electromagnetic field, the robotic garden tool including a body, one or more wheels coupled to the body, a working tool coupled to the body, and a first sensor set coupled to the body. Where the first sensor set includes a first sensor configured to detect the orientation and magnitude of the electromagnetic field along a first detection axis, and a second sensor configured to detect the orientation and magnitude of the electromagnetic field along a second detection axis and output a signal representative thereof. The garden tool also including a controller in operable communication with the first sensor set, where the controller is configured to determine the relative location of the boundary wire with respect to the first sensor set based at least in part on the signals output by the first and second sensors.

## Description

### CROSS-REFERENCE TO RELATED APPLICATIONS

This application claims priority to prior-filed, co-pending U.S. Provisional Patent Application No. 63/335,554 filed on April 27, 2022, and co-pending U.S. Provisional Patent Application No. 63/347,400 filed May 31, 2022. The entire contents of both is hereby incorporated by reference.

### FIELD OF THE INVENTION

The embodiments described herein are related to a robotic garden tool, and more specifically to boundary sensors and driving sequences to be used with a robotic garden tool.

### BACKGROUND OF THE INVENTION

Boundary wires are used to enclose the working area of the robotic garden tool. The robotic garden tool includes boundary wire sensors to ensure that the robotic garden tool stays within the working area. The robotic tool may also be driven along the edges of the delineated area.

### SUMMARY

In one aspect, a robotic garden tool for use with a boundary wire producing an electromagnetic field, the robotic garden tool including a body defining a first end, a second end opposite the first end, a first side extending between the first end and the second end, and a second side extending between the first end and the second end opposite the first side, and where the body includes a longitudinal axis extending centrally through the body and passing through both the first end and the second end, one or more wheels coupled to the body, a working tool coupled to the body, a first sensor set coupled to the body, where the first sensor set includes a first sensor configured to detect the orientation and magnitude of the electromagnetic field along a first detection axis and output a signal representative thereof, where the first sensor is positioned between the longitudinal axis and the first side of the body, and a second sensor configured to detect the orientation and magnitude of the electromagnetic field along a second detection axis and output a signal representative thereof, where the second sensor positioned between the longitudinal axis and the second side, and a controller in operable communication with the first sensor set, where the controller is configured to determine the relative location of the boundary wire with respect to the first sensor set based at least in part on the signals output by the first and second sensors.

Alternatively or additionally, in any combination, where the first sensor set defines a first set region between the first sensor and the second sensor, and where the controller is configured to determine whether the wire is positioned within the first set region.

Alternatively or additionally, in any combination, where the first set region is oriented perpendicular to the longitudinal axis.

Alternatively or additionally, in any combination, where the first sensor and the second sensor are both mounted in the vertical orientation.

Alternatively or additionally, in any combination, where the body defines a central axis perpendicular to the longitudinal axis, and where both the first detection axis and the second detection axis are oriented parallel to the central axis.

Alternatively or additionally, in any combination, further comprising a second sensor set coupled to the body, where the second sensor set includes a third sensor configured to detect the orientation and magnitude of the electromagnetic field along a third detection axis and output a signal representative thereof, where the third sensor is positioned between the longitudinal axis and the first side of the body, and a fourth sensor configured to detect the orientation and magnitude of the electromagnetic field along a fourth detection axis and output a signal representative thereof, where the fourth sensor positioned between the longitudinal axis and the second side.

Alternatively or additionally, in any combination, where the first sensor set is proximate the first end of the body and where the second sensor set is positioned proximate the second end of the body.

Alternatively or additionally, in any combination, where the first, second, third, and fourth sensors are all mounted to the body in a vertical orientation.

Alternatively or additionally, in any combination, where at least one of the first sensor and the second sensor are mounted to the body in a vertical orientation, and where the other of the first sensor and the second sensor are mounted to the body in a horizontal orientation.

Alternatively or additionally, in any combination, where the first sensor set further includes a third sensor configured to detect the orientation and magnitude of the electromagnetic field along a third detection axis, where the third sensor is positioned between the first sensor and the second sensor.

Alternatively or additionally, in any combination, where the first sensor and the second sensor are mounted in a vertical orientation, and where the third sensor is mounted in a horizontal orientation.

Alternatively or additionally, in any combination, where the third sensor is positioned on the longitudinal axis.

In another aspect, a robotic garden tool for use with a boundary wire producing an electromagnetic field, the robotic garden tool including a body defining a first end, a second end opposite the first end, a first side extending between the first end and the second end, and a second side extending between the first end and the second end opposite the first side, and where the body includes a longitudinal axis extending centrally through the body and passing through both the first end and the second end, one or more wheels coupled to the body, a working tool coupled to the body, a first sensor set coupled to the body, wherein the first sensor set includes a first sensor configured to detect the orientation and magnitude of the electromagnetic field along a first detection axis and output a signal representative thereof, a second sensor configured to detect the orientation and magnitude of the electromagnetic field along a second detection axis and output a signal representative thereof, and where the first sensor and the second sensor define a first set region therebetween, and where at least 90% of the first set region is positioned on one side of the longitudinal axis, and a controller in operable communication with the first sensor set, where the controller is configured to determine the relative location of the boundary wire with respect to the first sensor set based at least in part on the signals output by the first and second sensors.

Alternatively or additionally, in any combination, where both the first sensor and the second sensor are positioned on the same side of the longitudinal axis.

Alternatively or additionally, in any combination, where both the first sensor and the second sensor are mounted vertically to the body.

Alternatively or additionally, in any combination, where the controller is configured to determine whether the boundary wire passes through the first set region.

Alternatively or additionally, in any combination, further comprising a second sensor set coupled to the body, where the second sensor set includes a third sensor configured to detect the orientation and magnitude of the electromagnetic field along a third detection axis and output a signal representative thereof, a fourth sensor configured to detect the orientation and magnitude of the electromagnetic field along a fourth detection axis and output a signal representative thereof, and where the third sensor and the fourth sensor define a second set region therebetween, and where at least 90% of the second set region is positioned on one side of the longitudinal axis.

Alternatively or additionally, in any combination, where the first sensor set if positioned proximate the first end and where the second sensor set if positioned proximate the second end.

Alternatively or additionally, in any combination, where the first sensor set includes a third sensor configured to detect the orientation and magnitude of the electromagnetic field along a third detection axis, and where the third sensor is positioned between the first sensor and the second sensor.

Alternatively or additionally, in any combination, where the first and second sensors are mounted to the body in a vertical orientation, and where the third sensor is mounted to the body in a horizontal orientation.

In another aspect, a charging station for use with a robotic garden tool having a charging port, the charging station including a pad having a top surface, a hub extending from the top surface to produce a distal end, a charging terminal configured to form a temporary electrical connection with the charging port of the robotic garden tool, where the charging terminal is adjustable relative to the pad.

Alternatively or additionally, in any combination, where the charging terminal defines a docking axis, where the charging terminal is configured to engage the charging port in a direction parallel to the docking axis, and where the docking axis is adjustable relative to the pad.

Alternatively or additionally, in any combination, where the hub defines a hub axis, and where the docking axis extends radially from the hub axis.

Alternatively or additionally, in any combination, where the hub axis is normal to the top surface.

Alternatively or additionally, in any combination, where the top surface of the pad includes an alignment mechanism configured to align the robotic power tool relative to the charging terminal.

Alternatively or additionally, in any combination, where the alignment mechanism includes a pair of tracks formed into the top surface of the pad.

Alternatively or additionally, in any combination, where the charging terminal is a first charging terminal, the charging station further comprising a second charging terminal configured to form a temporary electrical connection with the robotic garden tool.

Alternatively or additionally, in any combination, where the first charging terminal and the second charging terminal are both independently adjustable relative to the pad.

Alternatively or additionally, in any combination, where the charging terminal maintains a constant distance from the top surface of the pad when being adjusted relative thereto.

In another aspect, a method of setting-up a charging station for use with a robotic garden tool having a docking port, where the charging station includes a pad, a hub extending from the pad, and a charging terminal adjustably mounted to the hub, where the charging terminal defines a docking axis, the method including coupling a first boundary wire portion to the pad to define a first boundary axis, coupling a second boundary wire portion to the pad to define a second boundary axis, adjusting the charging terminal relative to the pad to align the docking axis with one of the first boundary axis and the second boundary axis.

Alternatively or additionally, in any combination, where the hub defines a hub axis, and where the charging axis extends radially from the hub axis.

Alternatively or additionally, in any combination, where adjusting the charging terminal includes adjusting the charging terminal so that the charging terminal maintains a constant distance from the pad.

Alternatively or additionally, in any combination, where the pad includes an alignment mechanism defining an alignment axis, the method further comprising adjusting the pad to align the alignment axis with the docking axis.

Alternatively or additionally, in any combination, where the alignment mechanism includes a pair of parallel tracks formed into the pad.

Alternatively or additionally, in any combination, where the pad includes a plurality of channels formed therein, and where coupling the first boundary wire portion to the pad includes positioning at least a portion of the first boundary wire portion in a corresponding channel.

Alternatively or additionally, in any combination, further comprising docking the robotic garden tool to the charging terminal.

Alternatively or additionally, in any combination, where docking the robotic garden tool includes introducing the charging terminal to the charging port along the docking axis.

In another aspect, a charging station for use with a robotic garden tool having a charging port, the charging station including a pad having a top surface having an alignment mechanism thereon, where the alignment mechanism defines an alignment axis, the pad also defining a plurality of channels, each sized to receive at least a portion of a barrier wire therein, a hub extending from the top surface to produce a distal end, a charging terminal configured to form a temporary electrical connection with the charging port of the robotic garden tool, where the charging terminal defines a docking axis, where the top surface of the pad is adjustable relative to the charging terminal to align the alignment axis with the docking axis.

Alternatively or additionally, in any combination, where the alignment axis is adjustable relative to the channels.

Alternatively or additionally, in any combination, where the charging terminal is adjustable relative to the channels.

### BRIEF DESCRIPTION OF THE DRAWINGS

FIG. 1 is a plan view of a robotic garden tool positioned within a cutting area encompassed by a barrier.
FIG. 2 is a side view of the garden tool of FIG. 1.
FIG. 3 is a top view of the garden tool of FIG. 1.
FIG. 4 is an end view illustrating a boundary wire positioned below a support surface.
FIG. 5 is a top view of the garden tool of FIG. 1.
FIG. 6 is a top view of another embodiment of a garden tool.
FIGS. 7a and 7b illustrate another embodiment of a garden tool.
FIG. 8 is a top view of another embodiment of a garden tool.
FIGS. 9 and 9A illustrate another embodiment of a garden tool.
FIGS. 10 and 10A illustrate another embodiment of the garden tool.
FIGS. 11 and 11A illustrate another embodiment of the garden tool.
FIGS. 12 and 12A illustrate another embodiment of the garden tool.
FIG. 13 is a sketch of a graph showing the output of a sensor detecting the orientation and magnitude of the vertical component of the electromagnet field produced by a boundary wire.
FIG. 14 is a sketch of a graph showing the output of a sensor detecting the orientation and magnitude of the horizontal component of the electromagnetic field produced by a boundary wire.
FIG. 15 is a plan view of a robotic tool positioned within a cutting area encompassed by a barrier.
FIG. 16 is an end view of the barrier wire with the robotic tool of FIG. 15 positioned on a support surface.
FIG. 17 is a top perspective view of a robotic tool.
FIG. 18 is a top view of the robotic tool of FIG. 17.
FIG. 19 is a side view of the robotic tool of FIG. 17.
FIG. 20 is a bottom view of the robotic tool of FIG. 17.
FIG. 21 is a plan view of the robotic tool of FIG. 17 executing an inside turn profile.
FIG. 22 is a plan view of the robotic tool of FIG. 17 executing an outside turn profile.
FIGS. 23A-23C are plan views of the robotic tool of FIG. 17 executing an inside turn having a turn angle less than 90 degrees.
FIGS. 24A-24C are plan views of the robotic tool of FIG. 17 executing an inside turn having a turn angle greater than 90 degrees.
FIGS. 25A-25D are plan views of the robotic tool of FIG. 17 executing an outside turn having a turn angle less than 90 degrees.
FIGS. 26A-26D are plan views of the robotic tool of FIG. 17 executing an outside turn having a turn angle greater than 90 degrees.
FIGS. 27A-27C are plan views of the robotic tool of FIG. 17 executing another embodiment of an inside turn.
FIG. 28 is a flow chart illustrating the classification process of the controller of the robotic tool of FIG. 17.
FIG. 29 is a flow chart illustrating another embodiment of the classification process of the controller of the robotic tool of FIG. 17.
FIGS. 30A-30C are plan views of the robotic tool of FIG. 17 executing another embodiment of an outside turn.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

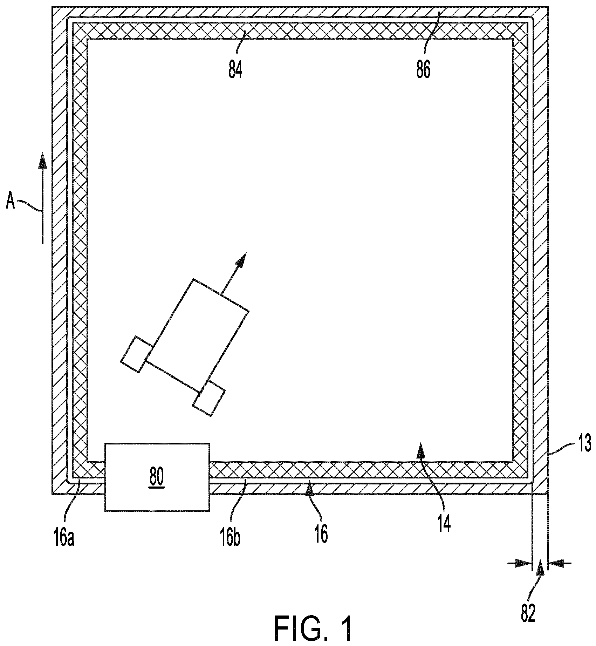

Figures 1-3 illustrate a robotic garden tool 10. More specifically, the garden tool 10 includes a robotic lawn mower for use to cut vegetation such as grass in an enclosed cutting or working area 14 having an outer perimeter 13. The cutting area 14 generally includes, but is not limited to, a continuous area of grass or other vegetation that is enclosed by one or more barriers 16, further described below. In the illustrated embodiment, the barriers 16 include a series of electrified wires enclosing the cutting area 14. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, and the like.

As shown in FIG. 1, the cutting area 14 is enclosed by a boundary wire 16 extending along the perimeter 13 while being inwardly offset therefrom. More specifically, the boundary wire 16 is placed at a specified offset distance 82 from the perimeter 13 of the working area 14. The boundary wire 16, in turn, includes a continuous and unbroken body of conductive material (e.g., metal) and includes a first end 16a and a second end 16b opposite the first end 16a. When installed, the boundary wire 16 may be placed on or above support surface 60 or may be placed in a shallow trench below the support surface 60.

In some embodiments, there may be a charging station 80 for the tool 10 positioned along the wire 16. The station 80 is connected to a power source and can act as a charging location for power to the tool 10 in addition to serving as a power source for electrifying the boundary wire 16. In the illustrated embodiment, the first end 16a of the boundary wire 16 is connected to one side of the charging station 80 while the second end 16b of the boundary wire 16 is connected to the other side of the charging station 80 to form a completed circuit or loop. Furthermore, the polarity of the power being applied to the wire 16 by the charging station 80 defines the current flow direction A within the wire 16.

In other embodiments, the charging station 80 may be located inside the cutting area 14 and away from the boundary wire 16 (i.e., not on the perimeter 13 of the cutting area 14). In such embodiments, the first end 16a and the second end 16b of the boundary wire 16 may be directly attached to a separate power source positioned along the perimeter 13 of the cutting area 14 (not shown). The power being applied to the wire 16 from the separate power source then defines the current flow direction A within the wire 16.

The boundary wire 16 also defines an inner perimeter side 84 and an outer perimeter side 86. More specifically, the inner perimeter side 84 of the wire 16 extends from the wire 16 horizontally toward the cutting area 14 while the outer perimeter side 86 of the wire 16 extends from the wire 16 horizontally away from the cutting area 14 (see FIG. 1). Since the illustrated boundary wire 16 does not cross over itself as it extends along the perimeter 13 of the cutting area 14, the inner perimeter side 84 and the outer perimeter side 86 remain on the same side of the wire 16, when viewed in the current flow direction A, along the wire's entire length. More specifically, the inner perimeter side 84 of the illustrated wire 16 extends from the right-hand side of the wire 16 over the entire length thereof while the illustrated outer perimeter side 86 extends from the left-hand side of the wire 16.

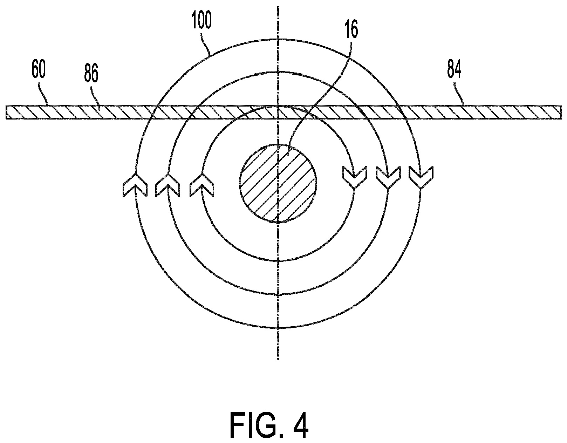

Once installed, the boundary wire 16 receives power from a power source (e.g., the charging station 80) whereby current flows through the boundary wire 16 in the flow direction A to produce an electromagnetic field 100 along the length thereof. The field lines of the resulting electromagnetic field 100, in turn, generally take on the shape of a series of concentric circles centered on the boundary wire 16 and extruded axially along its length (see FIG. 4). The orientation of the field lines within the electromagnetic field 100 are aligned with the current flow direction A following the right-hand rule. As such, when viewed in the direction of the current flow A, the field lines of the electromagnetic field 100 positioned to the right of the wire 16 (e.g., on the inner perimeter side 84) forms a downward or negative orientation while the field lines of the electromagnetic field 100 positioned to the left of the wire 16 (e.g., on the outer perimeter side 86) forms an upward or positive orientation.

As shown in FIG. 1, a boundary wire 16 extending along the perimeter of the cutting area 14 in a clockwise direction (e.g., the current direction A is in a clockwise direction) produces an electromagnetic field 100 whereby the portion of the field 100 present on the inner perimeter side 84 (e.g., the right hand side) is downward or negative in orientation while the field lines present on the outer perimeter side 86 (e.g., the left-hand side) are upward or positive in orientation. In contrast, a boundary wire 16 extending along the perimeter 13 of the cutting area 14 in a counter-clockwise direction (not shown) would produce the opposite electromagnetic orientations. Through this relationship, the user is able to predict what electromagnetic orientation is present immediately inside the perimeter 13 of the cutting area 14 (e.g., on the inner perimeter side 84) based on the current direction A as produced by the charging station 80.

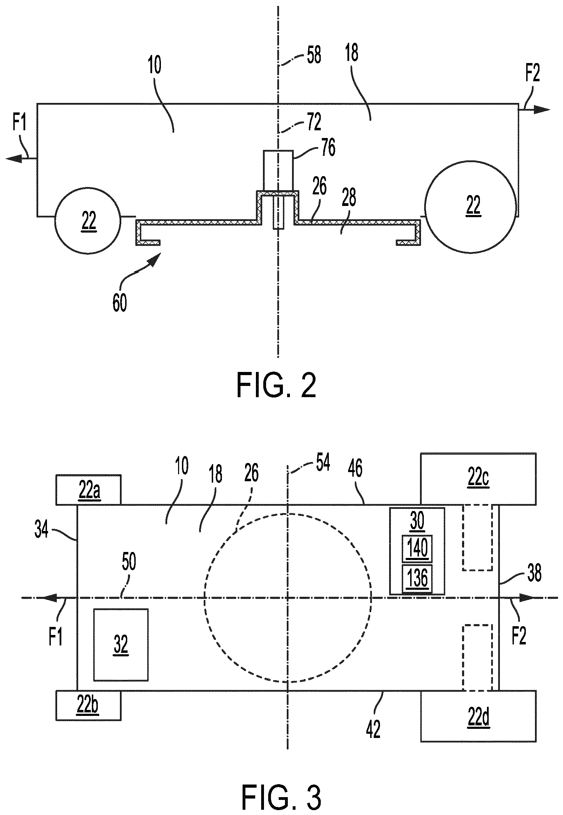

As shown in FIGS. 2 and 3, the tool 10 is an electrically powered, self-propelled device that includes a body 18, a plurality of wheels 22 rotatably mounted to the body 18, a working tool 26 mounted to the body 18, a controller 30, and a battery 32. The body 18, in turn, includes a front or first end 34, rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

As shown in FIGS. 2 and 3, the working tool 26 includes a rotating blade mounted for relative rotation about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. While the illustrated working tool 26 is a rotating blade, it is understood that in alternative embodiments the tool 26 may include, but is not limited to, reciprocating blades, a distributor or dispenser of some kind, and the like.

During use, the blade 28 is mounted to the body 18 of the garden tool 10 such that it is able to cut vegetation while the garden tool 10 is traveling in either a first or forward direction F1 (e.g., toward the first end 34) or traveling in a second or rearward direction F2 opposite the forward direction F1 (e.g., toward the second end 38).

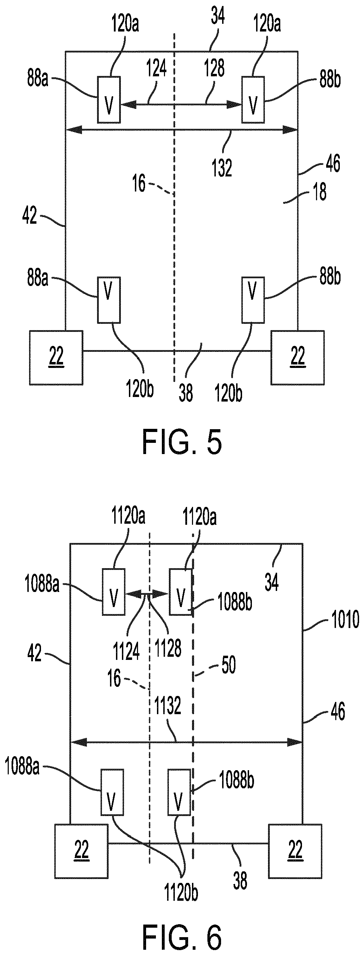

Turning to FIG. 5, the tool 10 also includes a plurality of sensors 88 coupled to the housing 18 and configured to measure the local electromagnetic field produced by the boundary wire 16. More specifically, each sensor 88 is configured to detect the direction and magnitude of the field lines of the electromagnetic field 100 along a pre-determined detection axis and output a signal to the controller 30 representative of the same. In the present tool 10, the sensors 88 are generally mounted to the housing 18 in either a "vertical orientation" or a "horizontal orientation," described below. For the purposes of this application, all sensors 88 coupled to the body 18 and having a vertical orientation are labeled with a "V" while all sensors 88 coupled to the body 18 and having a horizontal orientation are labeled with an "H". Furthermore, while the illustrated sensors 88 are mounted either vertically or horizontally, it is understood that in alternative embodiments the detection axis may be set at alternative orientations relative to the body 18 (e.g., 45 degrees relative to the central axis 58, and the like).

When mounted in a vertical orientation, the sensor 88 is configured to detect the direction and magnitude of the vertical component of the field lines of the electromagnetic field 100 at a given location (e.g., the detection axis is parallel to the central axis 58). In contrast, when mounted in a horizontal orientation, the sensor 88 is configured to detect the direction and magnitude of the horizontal component of the field lines of the electromagnetic field 100 at a given location (e.g., the detection axis is perpendicular to the central axis 58).

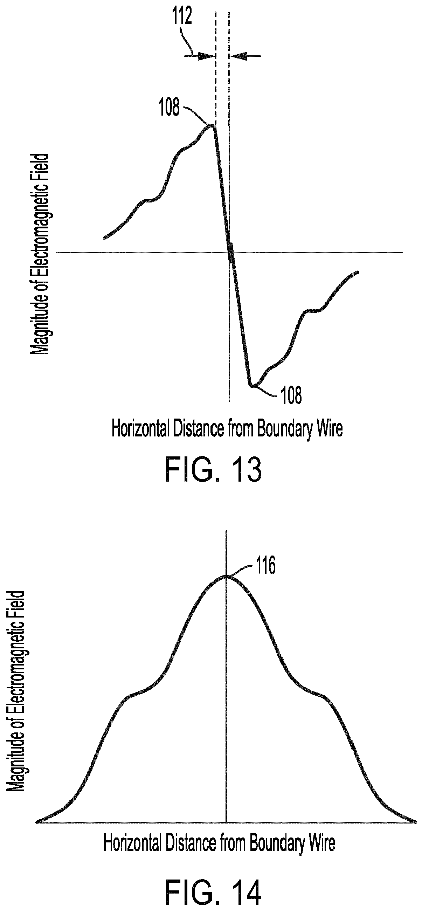

As shown in FIGS. 13 and 14, the orientation of a particular sensor 88 (e.g., vertically or horizontally) will influence the magnitude and sign of the electromagnetic field the sensor 88 detects for a given horizontal offset from the boundary wire 16. For example, for a vertically oriented sensor 88 the magnitude of the detected signal will be at or near zero when the sensor 88 is positioned directly above the boundary wire 16 (e.g., the horizontal offset is zero; see FIG. 13). The magnitude of the signal will then rapidly increase to a local maximum 108 when the sensor 88 is offset from the wire 16 at a predetermined peak horizontal distance 112 therefrom. Finally, the magnitude of the signal will begin to taper off from the local maximum as the sensor 88 continues to move further horizontally away from the wire 16 (e.g., the horizontal offset distance from the boundary wire 16 is greater than the predetermined peak horizontal distance 112). As described above, the sign of the detected electromagnetic field (e.g., whether the detected signal is positive or negative) is determined by which direction the sensor 88 is horizontally offset from the wire 16. In the illustrated embodiment, a horizontal sensor 88 will output a positive signal whenever the sensor 88 is positioned on the outer perimeter side 86 of the wire 16 (e.g., to the left of the wire 16 when viewed in the current flow direction A) and will output a negative signal whenever the sensor 88 is positioned on the inner perimeter side 84 of the wire 16 (e.g., to the right of the wire 16 when viewed in the current flow direction A).

For a horizontally oriented sensor 88, the magnitude of the signal is at an absolute maximum 116 when the sensor 88 is positioned directly above the boundary wire 16. The signal then begins to taper off from the absolute maximum 116 as the sensor 88 becomes more horizontally displaced from the wire 16 in either direction. Unlike the vertically oriented sensors 88 described above, the horizontally oriented sensors 88 do not change the sign of the detected signal dependent upon the side of the wire 16 they are positioned (see FIG. 14).

As shown in FIG. 5, the tool 10 includes a plurality of sensor sets 120, each containing a pair of vertically oriented sensors 88a, 88b therein. In the illustrated embodiment, the tool 10 includes two sets 120 with a first set 120a positioned proximate the first end 34 of the body 18 and a second set 120b positioned proximate the second end 38 of the body 18. However, in other embodiments, more or fewer sensor sets 120 may be present as needed. Furthermore, each set 120 may be positioned anywhere along the longitudinal length of the body 18 as desired.

As shown in FIG. 5, each set 120 includes a first or left sensor 88a and a second or right sensor 88b defining a first sensor region 124 therebetween. In the illustrated embodiment, each set 120 is positioned so that the two sensors 88a, 88b are positioned on opposite sides of the longitudinal axis 50 such that the first sensor 88a is positioned between the longitudinal axis 50 and the first side 42 while the second sensor 88b is positioned between the longitudinal axis 50 and the second side 46. More specifically, the sensors 88a, 88b are positioned so that they are spaced an equal distance from the longitudinal axis 50 (e.g., centered about the longitudinal axis 50) to define a set distance 128 therebetween. In the illustrated embodiment, the set distance 128 is more than half the body width 132 of the tool 10.

The controller 30 of the tool 10 is mounted within the body 18 and includes a processor 136 and memory 140. The controller 30 is at least in operable communication with each of the plurality of sensors 88. During use, the controller 30 is configured to receive a stream of information from the plurality of sensors 88, interpret the data via one or more algorithms stored in memory 140, and output signals to the various systems of the tool 10 in response thereto.

During operation, the signals output from the sensors 88 are used to determine the relative location of the boundary wire 16 with respect to the sensors themselves 88 and the tool 10. The data collected from the sensors 88 may be sent to the controller 30 whereby the controller 30 uses one or more algorithms stored in memory 140 to calculate the general position of the tool 10 with respect to the boundary wire 16. For example, in embodiments where a set 120 includes a pair of vertically oriented sensors 88, the controller 30 is able to determine the general location of the tool 10 relative to the boundary wire 16 based on the sign of the signals output therefrom. Specifically, if both vertically oriented sensors 88a, 88b in a set 120 measure a negative electromagnetic field orientation, then the controller 30 can determine that the set 120 is positioned completely on the inner perimeter side 84 of the wire 16 (e.g., the set 120 is completely positioned within the cutting area 14). Alternatively, if both sensors 88 of a set 120 measure a positive electromagnetic field orientation, then the controller 30 can determine that the set 120 is positioned completely on the outer perimeter side 86 of the boundary wire 16 (e.g., the set 120 is positioned outside the cutting area 14). Still further, if the two sensors 88 of a given set 120 measure electromagnetic fields with opposite signs, the controller 30 can determine that the boundary wire 16 is positioned between the two sensors 88 (e.g., within the set region 124). Still further, if either sensor 88 detects no electromagnetic field is present, the controller 30 can determine that the wire 16 is likely directly below the corresponding sensor 88. In some embodiments, the magnitude of the electromagnetic field may also be modeled in memory 140 so that the controller 30 can further calculate the horizontal offset between the wire 16 and a given vertically oriented sensor 88.

In sets 120 containing a horizontally oriented sensor 88, the controller 30 can generally calculate the horizontal offset distance between the wire 16 based on the magnitude of the detected electromagnetic field. In instances where the sensor 88 detects the absolute maximum 116, the controller 30 can determine that the wire 16 is positioned directly below the corresponding sensor 88.

The accuracy and resolution of the above-described calculations can also be improved by adding additional sets 120 to the tool 10. For example, the controller 30 of the tool 10 of FIG. 5 includes a front set 120a, and a rear set 120b to allow the controller 30 to independently monitor the relative location of the front and rear ends 34, 38 of the body 18 to the wire 16, respectively.

FIG. 6 illustrates a second embodiment of the tool 1010. The tool 1010 is substantially similar to the tool 10 so only the differences will be described in detail herein. The tool 1010 includes a plurality of sensor sets 1120, each containing a pair of vertically oriented sensors 1088a, 1088b therein. In the illustrated embodiment, the tool 1010 includes two sets 1120 with a first set 1120a positioned proximate the first end 34 of the body 18 and a second set 1120b positioned proximate the second end 38 of the body 18. However, in other embodiments, more or fewer sensor sets 1120 may be present as needed. Furthermore, each set 1120 may be positioned anywhere along the longitudinal length of the body 18.

As shown in FIG. 6, each set 1120 includes a first or left sensor 1088a and a second or right sensor 1088b defining a sensor region 1124 therebetween. In the illustrated embodiment, each set 1120 is positioned so that one of the second sensor 1088b is positioned on or proximate the longitudinal axis 50 of the body 18 while the first sensor 1088a is positioned between the second sensor 1088b and a respective side 42, 46 of the body 18. As a result, nearly the entire sensor region 1124 is offset laterally to one side of the body 18 (e.g., more than 90% of the sensor region 1124 is positioned to one side of the longitudinal axis 50). In still other embodiments, both sensors 1088a, 1088b of a respective set 1120 may be positioned between the longitudinal axis 50 and a corresponding side 42, 46 of the body 18 such that the entire sensor region 1124 may be positioned on one side of the longitudinal axis 50. The sensors 1088 of each set 1120 also define a set distance 1128 therebetween. In the illustrated embodiment, the set distance 1128 is less than half the body width 1132 of the tool 10.

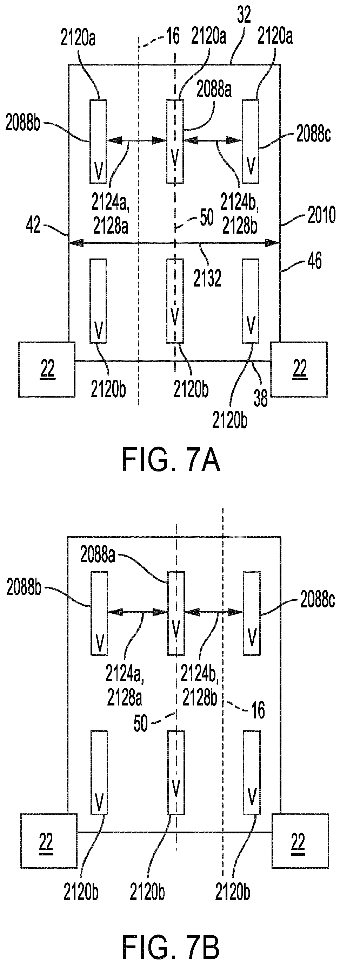

FIGS. 7a and 7b illustrate a third embodiment of the tool 2010. The tool 2010 is substantially similar to the tool 10 so only the differences will be described in detail herein. The tool 2010 includes a plurality of sensor sets 2120, each containing three vertically oriented sensors 2088a, 2088b, 2088c therein. In the illustrated embodiment, the tool 2010 includes two sets 2120 with a first set 2120a positioned proximate the first end 34 of the body 18 and a second set 2120b positioned proximate the second end 38 of the body 18. However, in other embodiments, more or fewer sensor sets 2120 may be present as needed. Furthermore, each set 2120 may be positioned anywhere along the longitudinal length of the body 18.

As shown in FIGS. 7a and 7b, each set 2120 includes a central vertical sensor 2088a, a left or second vertical sensor 2088b positioned a first set distance 2128a from the central sensor 2088a to define a first sensor region 2124a therebetween, and a right or third vertical sensor 2088c positioned a second set distance 2128 from the central sensor 2088a opposite the second sensor 2088b to define a second sensor region 2124b therebetween. In the illustrated embodiment, the central sensor 2088a is laterally centered with respect to the body 18 and aligned with the longitudinal axis 50. As such, the second sensor 2088b is positioned between the central sensor 2088a and one of the first side 42 and the second side 46 while the third sensor 2088c is positioned between the central sensor 2088a and the other of the first side 42 or second side 46. As shown in FIGS. 7A and 7B, both the first set distance 2128a and the second set distance 2128b are equal to each other and are both less than half the body width 2132 of the tool 10.

During use, the layout of the sensor sets 2120 permits the controller 30 to determine, based at least in part on the sign of the signals output by the sensors 2088a, 2088b, 2088c, whether the set 2120 is positioned completely on the inner perimeter side 84 of the wire 16 (e.g., all three sensors detect a negative electromagnetic field orientation), positioned completely on the outer perimeter side 86 of the wire 16 (e.g., all three sensors detect a positive electromagnetic field orientation), whether the wire 16 is positioned within the first sensor region 2124a (e.g., the second sensor 2088b outputs a signal having the opposite sign as the first and third sensors 2088a, 2088c; see FIG. 7a), or whether the wire 16 is positioned within the second sensor region 2124b (e.g., the third sensor 2088c outputs a signal having the opposite sign as the first and second sensors 2088a, 2088b; see FIG. 7b).

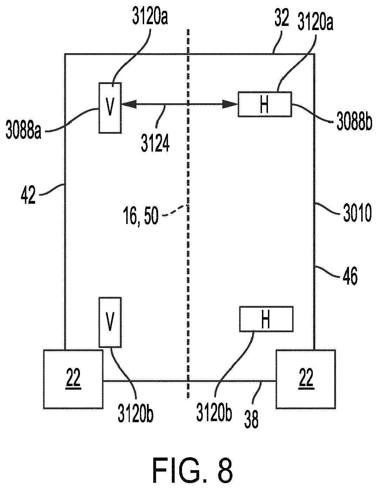

FIG. 8 illustrates a fourth embodiment of the tool 3010. The tool 3010 is substantially similar to the tool 10 so only the differences will be described in detail herein. The tool 3010 includes a plurality of sensor sets 3120, each containing one vertically oriented sensor 3088a and one horizontally oriented sensor 3088b. In the illustrated embodiment, the tool 3010 includes two sets with a first set 3120a positioned proximate the first end 34 of the body 18 and a second set 3120b positioned proximate the second end 38 of the body 18. However, in other embodiments, more or fewer sensor sets 3120 may be present as needed. Furthermore, each set 3120 may be positioned anywhere along the longitudinal length of the body 18.

As shown in Fig. 8, each set 3120 includes a vertically oriented sensor 3088a and a horizontally oriented sensor 3088b defining a sensor region 3124 therebetween. In the illustrated embodiments, the vertically and horizontally oriented sensors 3088a, 3088b are positioned on opposite sides of the longitudinal axis 50 so that one of the sensors 3088a, 3088b is positioned between the longitudinal axis 50 and the first side 42 while the other of the sensors 3088b is positioned between the longitudinal axis 50 and the second side 46. More specifically, the illustrated sensors 3088a, 3088b are positioned so that they are spaced an equal distance from the longitudinal axis 50.

While the illustrated sensors 3088a, 3088b are shown straddling the longitudinal axis 50, it is understood that in other embodiments both sensors 3088a, 3088b may be positioned on the same side thereof. Furthermore, in still other embodiments, the horizontal sensor 3088b may be centrally aligned with the axis 50 with the vertical sensor 3088a being offset to one side thereof.

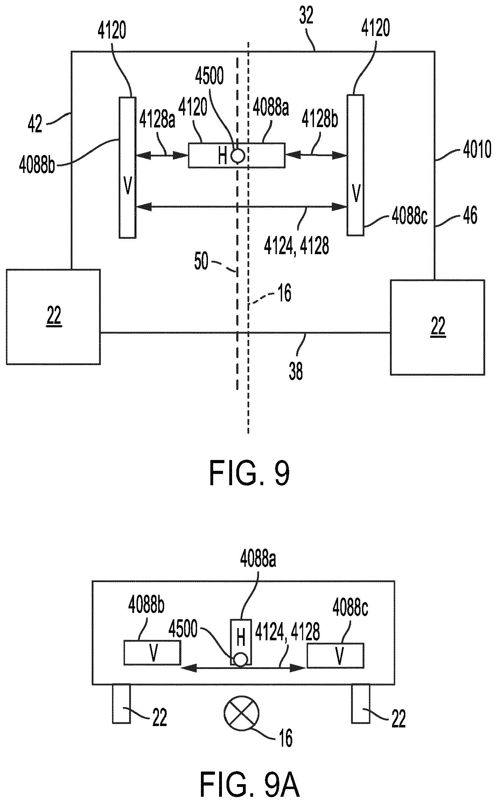

FIGS. 9 and 9A illustrate another embodiment of the tool 4010. The tool 4010 is substantially similar to the tool 10 so only the differences will be described in detail herein. The tool 4010 includes one or more sensor sets 4120, each containing one horizontally oriented sensor 4088a and two vertically oriented sensors 4088b, 4088c therein. In the illustrated embodiment, the tool 4010 includes a single set 4120 of sensors positioned proximate the first end 34 of the body 18, however in alternative embodiments additional sets of sensors may be included at different locations within the body 18.

As shown in FIGS. 9 and 9A, each set 4120 includes a first horizontally oriented central sensor 4088a, a second vertically oriented sensor 4088b positioned a first set distance 4128a from the central sensor 4088a, and a third vertically oriented sensor 4088c positioned a second set distance 4128b from the central sensor 4088a opposite the second sensor 4088b. Together, the three sensors 4088a, 4088b, 4088c form a single sensor region 4124 extending between the second sensor 4088b and the third sensor 4088c with the central sensor 4088a centrally located therebetween to define a set center point 4500 (e.g., the first set distance 4128a is equal to the second set distance 4128b). The sensor region 4124, in turn, defines a region width 4128 that is greater than half the body width 132 at that same location.

In the illustrated embodiment, the central sensor 4088a is also centrally located and aligned with the longitudinal axis 50 while the second sensor 4088b is positioned between the central sensor 4088a and one of the first side 42 and second side 46 and the third sensor 4088c is positioned between the central sensor 2088a and the other of the first side 42 and second side 46.

During use, the layout of the sensors 4088a, 4088b, 4088c permit the controller 30 to detect, based at least in part on the signals of the sensors, whether the wire is positioned within the sensor region 4124, and if so, how close the wire 16 is positioned relative to the center point 4500. More specifically, the controller 30 may rely on the sign of the signals output from the second and third sensors 4088b, 4088c to determine whether the wire 16 is positioned within the sensor region 4124 (described above). In instances where the wire 16 is positioned within the sensor region 4124, the controller 30 may then rely upon the magnitude of the signal output from the central sensor 4088a to determine the horizontal offset, if any, from the center point 4500.

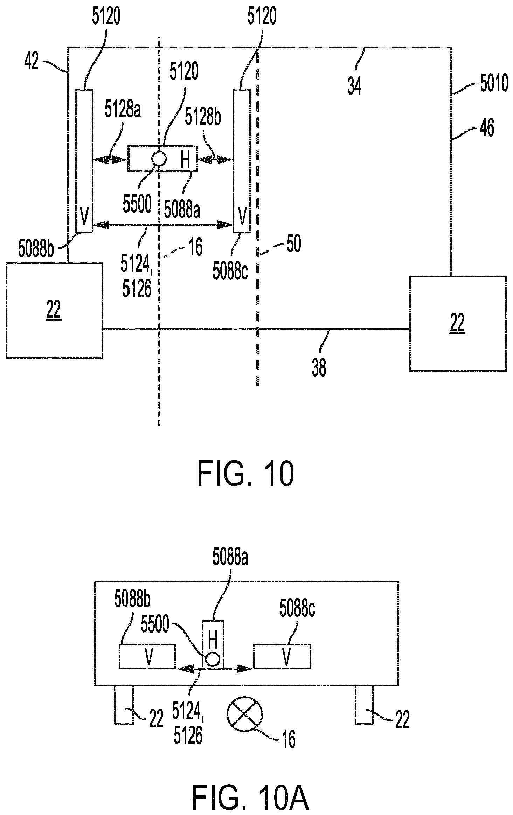

FIGS. 10 and 10A illustrate another embodiment of the tool 5010. The tool 5010 is substantially similar to the tool 10 so only the differences will be described in detail herein. The tool 5010 includes one or more sensor sets 5120, each containing one horizontally oriented sensor 5088a and two vertically oriented sensors 5088b, 5088c therein. In the illustrated embodiment, the tool 5010 includes a single set 5120 of sensors positioned proximate the first end 34 of the body 18, however in alternative embodiments additional sets of sensors may be included at different locations within the body 18.

As shown in FIG. 10, each set 5120 includes a first horizontally oriented central sensor 5088a, a second vertically oriented sensor 5088b positioned a first set distance 5128a from the central sensor 5088a, and a third vertically oriented sensor 5088c positioned a second set distance 5128b from the central sensor 5088a opposite the second sensor 5088b. Together, the three sensors 5088a, 5088b, 5088c form a single sensor region 5124 extending between the second sensor 5088b and the third sensor 5088c with the central sensor 5088a positioned centrally therebetween to establish a set center point 5500 (e.g., the first set distance 5128a is equal to the second set distance 5128b). The sensor region 5124, in turn, defines a region width 5126 that is less than half the body width 132 at that same location.

In the illustrated embodiment, the set 5120 is positioned so that the third sensor 5088c is generally centrally positioned proximate to the longitudinal axis 50 such that the central sensor 5088a and second sensor 5088b are offset on the same side of the longitudinal axis 50. Indeed, the illustrated set 5120 is positioned so that at least 90% of the sensor region 5124 is positioned to one side of the longitudinal axis 50. In other embodiments, the set 5120 may be positioned so that all three sensors 5088a, 5088b, 5088c are offset to the same side of the longitudinal axis 50 and the entirety of the sensor region 5124 is positioned on one side of the longitudinal axis 50.

During use, the layout of the sensors 5088a, 5088b, 5088c permit the controller 30 to detect, based at least in part on the signals of the sensors, whether the wire is positioned within the sensor region 5124, and if so, how close the wire 16 is positioned relative to the center point 5500. More specifically, the controller 30 may rely on the sign of the signals output from the second and third sensors 5088b, 5088c to determine whether the wire 16 is positioned within the sensor region 5124 (described above). In instances where the wire 16 is positioned within the sensor region 5124, the controller 30 may then rely upon the magnitude of the signal output from the central sensor 5088a to determine the horizontal offset, if any, from the center point 5500.

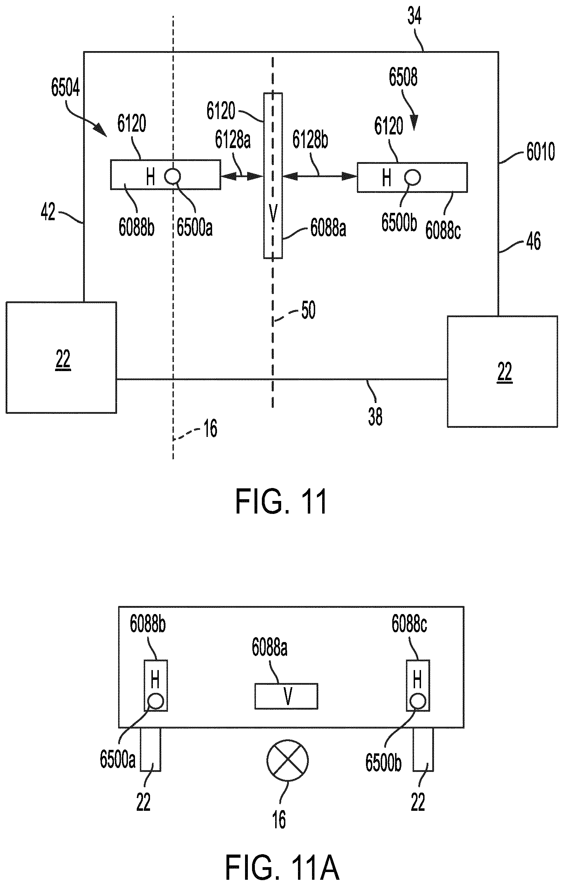

FIGS. 11 and 11A illustrate another embodiment of the tool 6010. The tool 6010 is substantially similar to the tool 10 so only the differences will be described in detail herein. The tool 6010 includes one or more sensor sets 6120, each containing one vertically oriented sensor 6088a and two horizontally oriented sensors 6088b, 6088c therein. In the illustrated embodiment, the tool 6010 includes a single set 6120 of sensors positioned proximate the first end 34 of the body 18, however in alternative embodiments additional sets of sensors may be included at different locations within the body 18.

As shown in FIG. 11, each set 6120 includes a first vertically oriented central sensor 6088a, a second horizontally oriented sensor 6088b positioned a first set distance 6128a from the central sensor 6088a to define a first set side 6504, and a third horizontally oriented sensor 6088c positioned a second set distance 6128b from the central sensor 6088a opposite the second sensor 6088b to define a second set side 6508.

In the illustrated embodiment, the central sensor 6088a is centered laterally with respect to the body 18 and aligned with the longitudinal axis 50. Furthermore, the second sensor 6088b is positioned between the central sensor 6088a and one of the first side 42 and second side 46 while the third sensor 6088c is positioned between the central sensor 6088a and the other of the first side 42 and second side 46. More specifically, both the second and third sensors 6088b, 6088c are centered between the central sensor 6088a and their respective side to define a corresponding center point 6500a, 6500b, respectively.

During use, the layout of the sensors 6088a, 6088b, 6088c permit the controller 30 to detect, based at least in part on the signals of the sensors, whether the wire is positioned on the first set side 6504 or the second set side 6508, and then, how close the wire 16 is positioned relative to the corresponding center point 6500a, 6500b. More specifically, the controller 30 relies upon the sign of the signal output by the central sensor 6088a to determine whether the wire 16 is positioned on the first set side 6504 (e.g., a negative electromagnetic field is detected) or the second set side 6508 (e.g., a positive electromagnetic field is detected). With the side 6504, 6508 determined, the controller 30 may then rely upon the magnitude of the signal output from the sensor 6088b, 6088c corresponding to the selected side to determine the horizontal offset, if any, from the corresponding center point 6500a, 6500b.

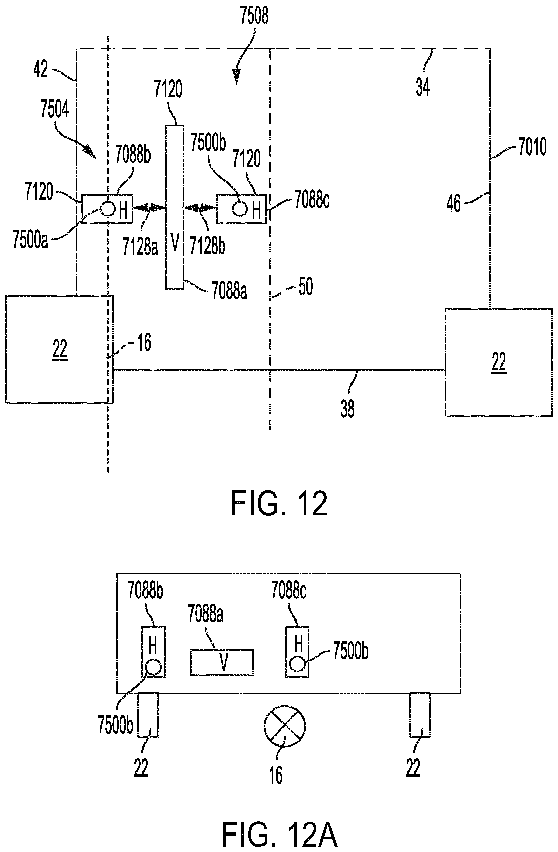

FIGS. 12 and 12A illustrate another embodiment of the tool 7010. The tool 7010 is substantially similar to the tool 10 so only the differences will be described in detail herein. The tool 7010 includes one or more sensor sets 7120, each containing one vertically oriented sensor 7088a and two horizontally oriented sensors 7088b, 7088c therein. In the illustrated embodiment, the tool 7010 includes a single set 7120 of sensors positioned proximate the first end 34 of the body 18, however in alternative embodiments additional sets of sensors may be included at different locations within the body 18.

As shown in FIG. 10, each set 7120 includes a first vertically oriented central sensor 7088a, a second horizontally oriented sensor 7088b positioned a first set distance 7128a from the central sensor 7088a to define a first set side 7504, and a third horizontally oriented sensor 7088c positioned a second set distance 7128b from the central sensor 7088a opposite the second sensor 7088b to define a second set side 7508. The second and third sensors 7088b, 7088c also define a center point 7500a, 7500b for their respective set sides 7504, 7508.

In the illustrated embodiment, the set 7120 is positioned so that central sensor 7088a is laterally centered between the longitudinal axis 50 and a corresponding side 42, 46 of the body. The central sensor 7088a is also generally centered between the second and third sensors 7088b, 7088c (e.g., the first set distance 7128a is equal to the second set distance 7128b). As shown in FIG. 10, all three sensors 7088a, 7088b, 7088c are positioned on the same side of the longitudinal axis 50.

During use, the layout of the sensors 7088a, 7088b, 7088c permit the controller 30 to detect, based at least in part on the signals of the sensors, whether the wire is positioned on the first set side 7504 or the second set side 7508, and then, how close the wire 16 is positioned relative to the corresponding center point 7500a, 7500b. More specifically, the controller 30 relies upon the sign of the signal output by the central sensor 7088a to determine whether the wire 16 is positioned on the first set side 6504 (e.g., a negative electromagnetic field is detected) or the second set side 6508 (e.g., a positive electromagnetic field is detected). With the side 6504, 6508 determined, the controller 30 may then rely upon the magnitude of the signal output from the sensor 6088b, 6088c corresponding to the selected side to determine the horizontal offset, if any, from the corresponding center point 6500a, 6500b.

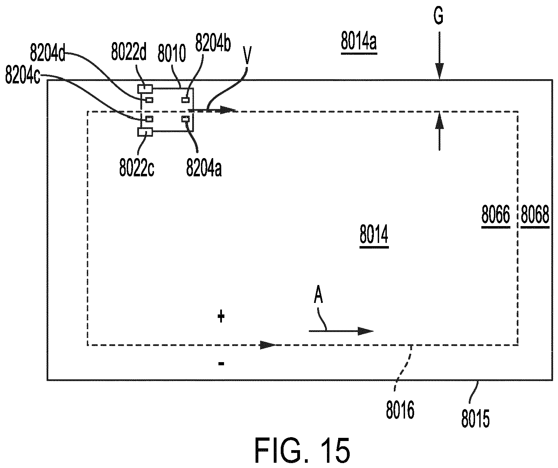

FIG. 15 illustrates another embodiment of a robotic tool 8010. More specifically, the robotic tool 8010 is a robotic lawn mower for use to cut vegetation such as grass in an enclosed cutting area 8014 having an outer perimeter 8015. The cutting area 8014 generally includes, but is not limited to, a continuous area of grass or other vegetation that is enclosed by one or more barriers 8016. In the illustrated embodiment, the barriers 8016 include a series of electrified wires enclosing the cutting area 8014. As shown in FIG. 15, such barriers 8016 may be used to enclose the overall cutting are 8014 and/or segregate one or more interior regions from the cutting area 8014. While the illustrated tool 8010 is a robotic mower, it is understood that in alternative embodiments, other forms of robotic tool may be used including, but not limited to, a robotic trimmer, a robotic sprinkler, a robotic fertilizer spreader, a robotic vacuum cleaner, and the like.

As shown in FIG. 15, the cutting area 8014 is enclosed by a boundary wire 8016 extending along the perimeter 8015 while being inwardly offset therefrom to form a gap G therebetween. The gap G, in turn, may be selected based on the size and layout of the robotic tool 8010 such that the boundary wire 8016 and perimeter 8015 are appropriate spaced from one another to allow the tool 8010 to travel or otherwise maneuver along the wire 8016 without coming into contact with or traveling outside the perimeter 8015.

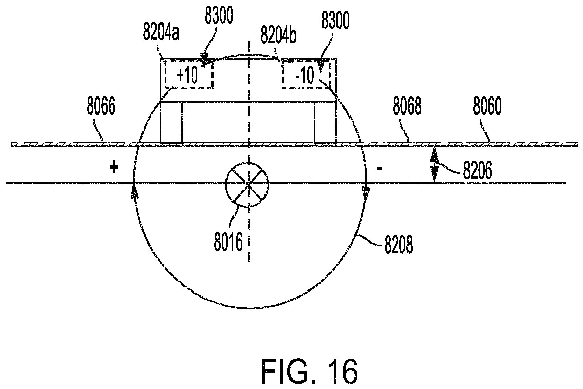

As schematically illustrated in FIG. 16, the boundary wire 8016 may be buried below the support surface 8060 at a boundary wire depth 8206. The boundary wire 8016 may be separated from any physical barrier that otherwise demarcates the perimeter 8015 of the cutting area 8014 from the surroundings 8014a. In the illustrated embodiment, the boundary wire 8016 forms a continuous and unbroken loop of conductive material (e.g., metal) generally surrounding the cutting area 8014. During use, electrical current is passed through the boundary wire 8016 in a current flow direction A whereby an electromagnetic field 8208 is generated along the length thereof. The field lines of the resulting electromagnetic field 8208, in turn, generally take on the shape of a series of concentric circles centered on the boundary wire 8016 and extruded axially along its length. The orientation of the field lines within the electromagnetic field 8208 are aligned with the current flow direction A following the right-hand rule. As such, when viewed in the direction of the current flow A, the field lines of the electromagnetic field 8208 positioned to the right of the wire 8016 forms a downward or negative orientation while the field lines of the electromagnetic field 8208 positioned to the left of the wire 8016 forms an upward or positive orientation.

The boundary wire 8016 also defines an inner perimeter side 8066 and an outer perimeter side 8068. The inner perimeter side 8066 of the wire 8016 extends from the wire 8016 horizontally toward the cutting area 8014 while the outer perimeter side 8068 of the wire extends from the wire 8016 horizontally away from the cutting area 8014 (e.g., extends into the surrounding area 8014a, see FIG. 15). Since the illustrated boundary wire 8016 does not cross over itself as it extends along the perimeter 8015 of the cutting area 8014, the inner perimeter side 8066 and the outer perimeter side 8068 remain on the same side of the wire 8016 when viewed in the current flow direction A. More specifically, the inner perimeter side 8066 of the illustrated wire 8016 extends from the left-hand side of the wire 8016 over the entire length thereof where the illustrated outer perimeter side 8068 extends from the right-hand side of the wire 8016 of the entire length thereof.

As shown in FIG. 15, a boundary wire 8016 extending along the perimeter of the cutting area 8014 in a counter-clockwise direction (e.g., the current direction A is in a counter-clockwise direction) produces an electromagnetic field 8208 whereby the portion of the field 8208 present along the entire inner perimeter side 8066 (e.g., the left-hand side) is upward or positive in orientation while the field lines present along the entire outer perimeter side 8068 (e.g., the right-hand side) are downward or negative in orientation. In contrast, a boundary wire 8016 extending along the perimeter 8015 of the cutting area 8014 in a clockwise direction (not shown) would produce the opposite electromagnetic orientations.

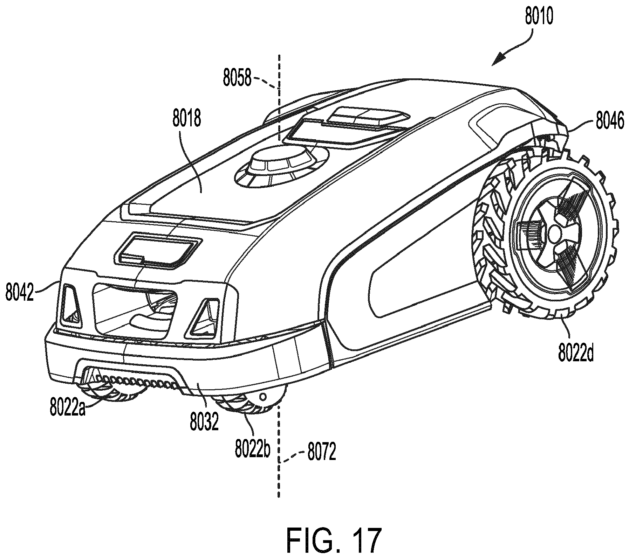

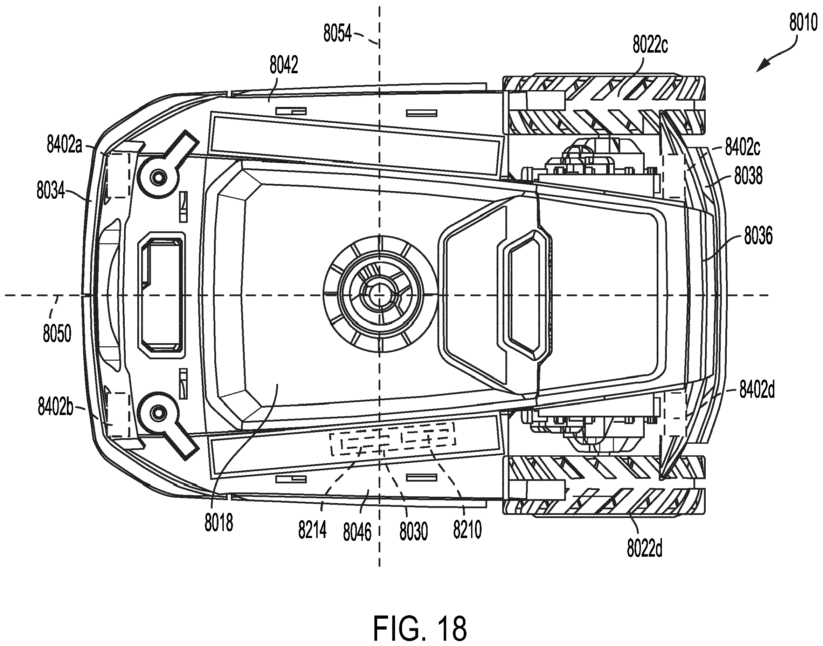

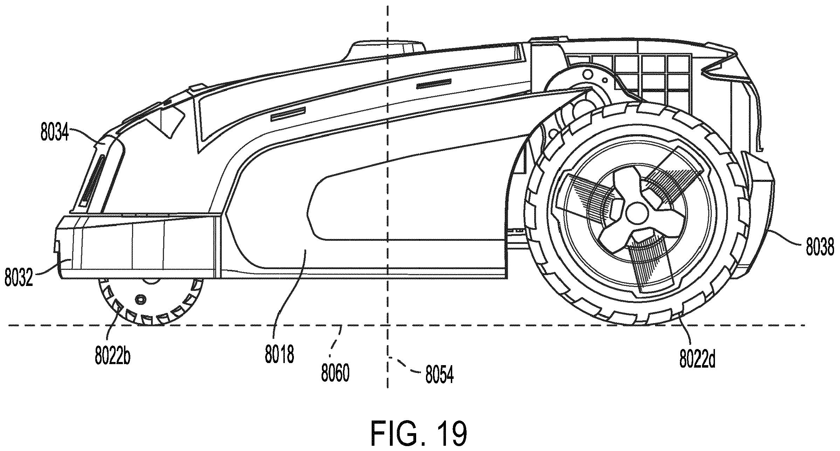

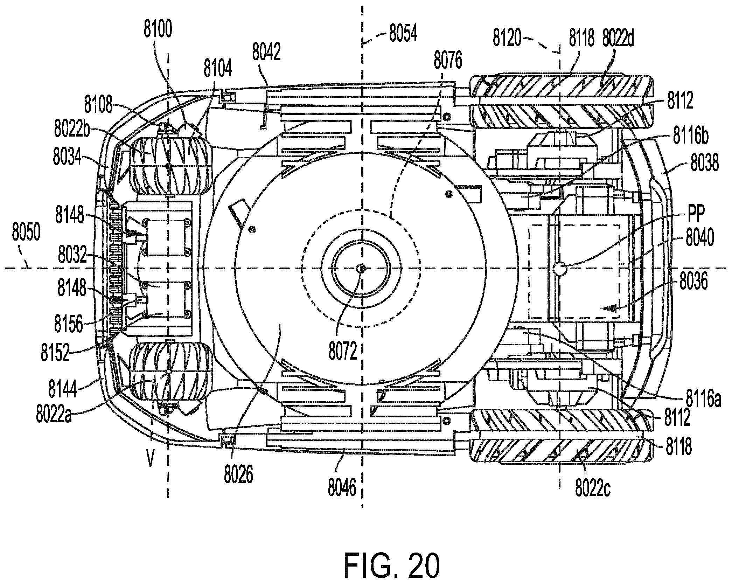

As shown in FIGS. 17-20, the garden tool 8010 is an electrically powered, self-propelled device that includes a body 8018, a plurality of wheel assemblies 8022 mounted to the body 8018, a working tool assembly 8026 (FIG. 20) mounted to the body 8018, one or more bump sensor assemblies 8032 mounted to the body 8018, a battery compartment assembly 8036 mounted to the body 8018 and configured to receive a rechargeable battery 8040 therein, and a controller 8030 (FIG. 18) mounted to the body 8018.

As shown in FIG. 20, the garden tool 8010 includes four-wheel assemblies 8022a, 8022b, 8022c, 8022d, each configured to support the garden tool 8010 for self-driven movement along a support surface 8060 (e.g., the surface of the cutting area 8014, FIG. 15). In the illustrated embodiment, the wheel assemblies 8022a, 8022b, 8022c, 8022d include two steerable, undriven wheel assemblies 8022a, 8022b and two non-steerable, driven wheel assemblies 8022c, 8022d. However, in alternative embodiments, all or any sub-set of the wheel assemblies 8022 may be driven and all or any sub-set of the wheel assemblies 8022 may be steerable. Furthermore, while the illustrated steerable wheel assemblies are passive in nature (e.g., a caster-style wheel), it is understood that in alternative embodiments the steerable wheel assemblies 8022a, 8022b may be actively driven by the controller 8030.

With continued reference to FIG. 20, the front or steerable wheel assemblies 8022a, 8022b include a base 8100, a wheel 8104, and an axle shaft 8108 extending between the wheel 8104 and the base 8100. When assembled, the wheel 8104, base 8100 and axle shaft 8108 provide two degrees of rotation, the first being the relative rotation between the wheel 8104 and the shaft 8108 about a substantially horizontal axis and the second being rotation between the base 8100 and the axle shaft 8108 about a substantially vertical axis. Together, these two degrees of rotation generate a caster wheel construction whereby the wheel 8104 can rotate about the horizontal axis while traveling along the support surface 8060 and the wheel 8104 can rotate about the vertical axis to change orientation relative to the body 8018 for turning and the like.

With continued reference to FIG. 20, the rear or driven wheel assemblies 8022c, 8022d each include a gearbox 8112, a wheel 8118 rotatably mounted to the gearbox 8112, and a drive motor 8116a, 8116b mounted to the gearbox 8112. During use, the controller 8030 sends signals to the motors 8116a, 8116b which, in turn, outputs torque to the wheel 8118 via the gearbox 8112. The motors 8116a, 8116b are an electric motor configured to be driven upon receive of a drive signal from the controller 8030 and power from the battery 8040. The wheels 8118 of the driven wheel assemblies 8022c, 8022d are fixed in the illustrated embodiment along a horizontal axis 8120. The horizontal axis 8120 is generally parallel with the lateral axis 8054 of the body 8018 (described below).

As will be described in detail below, the controller 8030 may send signals to the motors 8116a, 8116b of one or each of the driven wheel assemblies 8022c, 8022d to drive the garden tool 8010. This driving may be conducted in either a forward direction or a rearward (i.e., retreating) direction. The driven wheel assemblies 8022c ,8022d may be driven at different angular velocities (i.e., a first angular velocity and a second angular velocity unequal to each other) such that the garden tool 8010 turns. In the illustrated embodiment, the tool 8010 is configured to turn or pivot about a pivot point PP positioned on the horizontal axis 8120 and centered between the driven wheel assemblies 8022c, 8022d (e.g., coincident with the longitudinal axis 8050). Accordingly, the garden tool 8010 can be selectively maneuvered within the cutting area 8014 and/or along the boundary wire 8016.

With continued reference to FIGS. 17-20, the body 8018 of the tool 8010 includes a front or first end 8034, a rear or second end 8038 opposite the first end 8034, a right or first side 8042, and a left or second side 8046 opposite the first side 8042. The body 8018 defines a longitudinal axis 8050 extending along the length of the body 18 and centered between the first side 8042 and the second side 8046 (e.g., passing through both the first and second ends 8034, 8038). The body 8018 defines a lateral axis 8054 extending along the width of the body 8018 and centered between the first and second ends 8034, 8038 (e.g., passing through both the first and second sides 8042, 8046). The body 8018 also defines a central axis 8058 generally positioned at the intersection of the longitudinal and lateral axes 8050, 8054 and oriented perpendicular to the longitudinal and lateral axes 8050, 8054. In other words, the central axis 8058 extends in a generally vertical orientation perpendicular to the cutting area 8014.

As shown in FIG. 20, the working tool 8026 of the tool 8010 is a cutting assembly 8026. The cutting assembly 8026 includes a blade 8028 mounted for rotation relative to the body 8018 about a blade axis 8072. The working tool 8026 is coupled to a blade motor 8076 to drive the blade 8028. The working tool 8026 is coupled to the body 8018 such that the blade 8028 may translate along the blade axis 8072 relative to the body 8018 to change a depth of cut (i.e., cutting height) of the blade 8028 relative to the support surface 8060.

With reference to FIG. 20, the bump sensor assembly 8032 of the garden tool 8010 includes a bumper 8144, and a pair of bump sensors 8148. Each sensor 8148, in turn, includes a base portion 8152 fixedly coupled to the body 8018, and a plunger 8156 extending between and coupled to both the bumper 8144 and the base portion 8152. During use, external forces may be applied to the bumper 8144 (e.g., contacting the user, a barrier, and the like) causing the bumper 8144 and plunger 8156 to move relative to the base portion 8152. This movement, in turn, is output to the controller 8030 as a signal. The controller 8030 may drive the wheel assemblies 8022a-8022d in response to the signal output from at least one of the bump sensors 8148.

As shown in FIG. 18, the garden tool 10 includes a plurality of boundary sensors 8204a-8204d mounted thereto. More specifically, the illustrated garden tool 8010 has four boundary sensors 8204a-8204d, with each sensor 8204a-8204d assigned to and positioned adjacent a corresponding corner of the body 8018 (i.e., a front right sensor 8204a, a front left sensor 8204b, a rear right sensor 8204c, a rear left sensor 8204d) to form a substantially rectangular pattern. Stated differently, the sensors 8204a-8204d are positioned so that one sensor 8204a is positioned forward of the lateral axis 8054 and to the right of the longitudinal axis 8050, another sensor 8204b is positioned forward of the lateral axis 8054 and to the left of the longitudinal axis 8050, another sensor 8204c to the rear of the lateral axis 8054 and to the right of the longitudinal axis 8050, and another sensor 8204d to the rear of the lateral axis 8054 and to the left of the longitudinal axis 8050. While the illustrated garden tool 8010 includes four sensors 8204a-8204d positioned proximate each corner of the body 8018, it is understood that in alternative embodiments more or fewer sensors may be present and/or the sensors may be positioned in a different pattern about the body 8018.

During operation, each sensor 8204a-8204d is configured to detect the local orientation and magnitude of the electromagnetic field 8208 produced by the boundary wire 8016. More specifically, each sensor 8204a-8204d is configured to detect the direction and magnitude of the field lines of the electromagnetic field 8208 along a pre-determined detection axis and output a sensor value 8300 to the controller 8030 representative of the same. In the present tool 8010, the sensors 8204a-8204d are generally mounted to the housing in a "vertical orientation" such that the sensors 8204a-8204d detect the direction and magnitude of the vertical component of the field lines of the electromagnetic field 8208 at a given location (e.g., the detection axis is parallel to the central axis 8058). However, in other embodiments, one or more of the sensors may be mounted to the body 8018 in a different orientation such that the detection axis is in a horizontal or other orientation relative to the body 8018.

The polarity or sign of the sensor value 8300 is generally representative of the position of the boundary sensor 8204a-8204d relative to the boundary wire 8016. More specifically, a boundary sensor 8204a-8204d will have a first polarity when the sensor 8204a-8204d is positioned beyond the boundary wire 8016 (e.g., when the sensor 8204a-8204d is on the outer perimeter side 8068; see FIG. 16) and the sensor 8204a-8204d will have a second polarity opposite the first polarity when the boundary sensor 8204a-8204d is positioned within the boundary wire 8016 (e.g., when the boundary sensor 8204a-8204d is on the inner perimeter side 8066). In the illustrated embodiment where the boundary wire 8016 has a counter-clockwise current flow A, a given sensor 8204a-8204d will output a negative sensor value 8300 when positioned on the outer perimeter side 8068 and a positive sensor value 8300 when positioned on the inner perimeter side 8066. In contrast, in instances where the boundary wire 8016 has a clockwise current flow A (not shown), a given sensor 8204a-8204d will output a positive sensor value 8300 when positioned on the outer perimeter side 8068 and a negative sensor value 8300 when positioned on the inner perimeter side 8066.

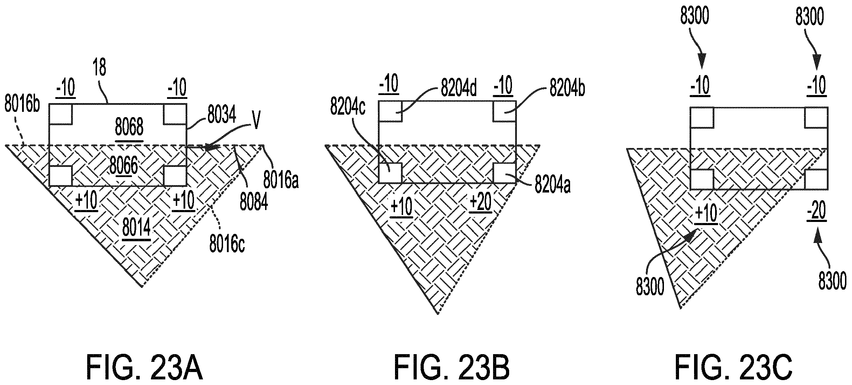

In addition to the polarity of the sensor value 8300, the magnitude of the sensor value 8300 provides addition information regarding the relative position between a respective boundary sensor 8204a-8204d and the boundary wire 8016. More specifically, the magnitude of the sensor value 8300 generally corresponds to the horizontal distance or offset between a corresponding boundary sensor 8204a-8204d and the boundary wire 8016. In the illustrated embodiment, the magnitude 8308 generally increases the smaller the horizontal offset between the sensor 8300 and the boundary wire 8016 and generally decreases the larger the horizontal offset 8080 between the sensor 8300 and the boundary wire 8016. As is demonstrated in FIGS. 23A-26D, in some embodiments, a respective boundary sensor 8204a-8204d may output a higher magnitude 8308 (e.g., +/- 20 units) when positioned proximate the wire 8016 and output a lower magnitude 8308 (e.g., +/- 1 unit) when positioned further away from the wire 8016.

With continued reference to FIG. 18, the controller 8030 of the tool 8010 is mounted to the body 8018 and includes a processor 8210 and memory 8214. The controller 8030 is at least in electrical communication with each of the sensors 8204a-8204d and the motors 8116a, 8116b of the driven wheels 8022c, 8022d. During use, the controller 8030 is configured to receive a stream of information from the plurality of sensors 8204a-8204d, interpret that data via one or more algorithms stored in memory 8214, and output signals to the various system of the tool 8010 in response thereto. More specifically, the controller 8030 is configured to determine one or more attributes of the underlying boundary wire 8016 based at least in part on the signals output by the sensors 8204a-8204d, select one of a plurality of pre-saved turn profiles 8400, 8500, 8600 based at least in part on the determined attributes, and output signals to the first and second driven wheels 8022c, 8022d to execute the selected turn profile 8400, 8850, 8600.

Each boundary sensor 8204a-8204d may continuously sense data during navigation of the garden tool 8010 upon the support surface 8060. As described above, each boundary sensor 8204a-8204d is configured to detect the magnitude and orientation of the electromagnetic field 208 along a pre-determined detection axis. Frequency of data collection may be unitized amongst each of the boundary sensors 8204a-8204d to allow for simplified collection by the controller 8030. The controller 8030 may gather data from each of the boundary sensors 8204a-8204d and organize it such that the data of each boundary sensor 8204a-8204d relates to a common time of operation.

It is envisioned that the controller 8030 may control the driven wheel assemblies 8022c, 8022d based on at least one of the collocated data sets corresponding to a common time of operation (e.g., time t). In some embodiments, the controller 8030 may store data (e.g., the sensor values 8300) gathered by the boundary sensors 8204a-8204d at the common time of operation (e.g., time t) in the memory 8031. The controller may store data (e.g., the sensor values 8300) gathered by the boundary sensors 8204a-8204d at a plurality of common times of operation (e.g., time t, time t-1, time t-2, etc....) in the memory 8031. It is also envisioned that the controller 8030 may control the driven wheel assemblies 8022c, 8022d based on a plurality of the collocated data sets corresponding to a plurality of common times of operation (e.g., time t, time t-1, time t-2, etc....). Accordingly, the controller 8030 can access a plurality of data points in the memory 8031 from each of the boundary sensors 8204a-8204d in making decisions to drive the driven wheel assemblies 8022c, 8022d.

During operation, the stream of signals output from the sensors 8204a-8204d are used by the controller 8030 to continuously determine the relative location of the boundary wire 8016 with respect thereto. More specifically, the data collected from the sensors 8204a-8204d is sent to the controller 8030 whereby the controller 8030 uses one or more algorithms stored in memory 8140 to individually calculate the position of each sensor 8204a-8204d with respect to the boundary wire 8016 for each time iteration. Based at least in part on the relative location data of each sensor 8204a-8204d and the known position of each sensor 8204a-8204d within the body 8018 of the tool 8010, the controller 8030 can then calculate one or more attributes regarding the portion of the boundary wire 8016 immediately adjacent to the tool 8010 at any given point in time. Such attributes may include, but are not limited to, whether a corner 8016a is present, the direction of the corner 8016a (e.g., to the left or to the right), the corner type (e.g., whether the corner 8016a is an inside corner or an outside corner), and the corner angle 8084 (e.g., the angle between the leading segment 8016b and the trailing segment 8016c).

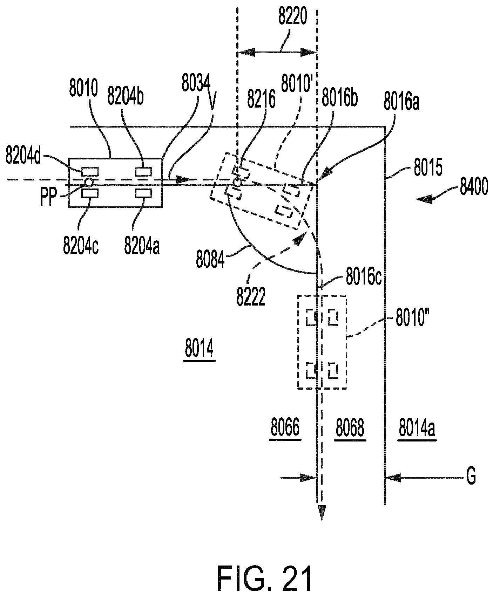

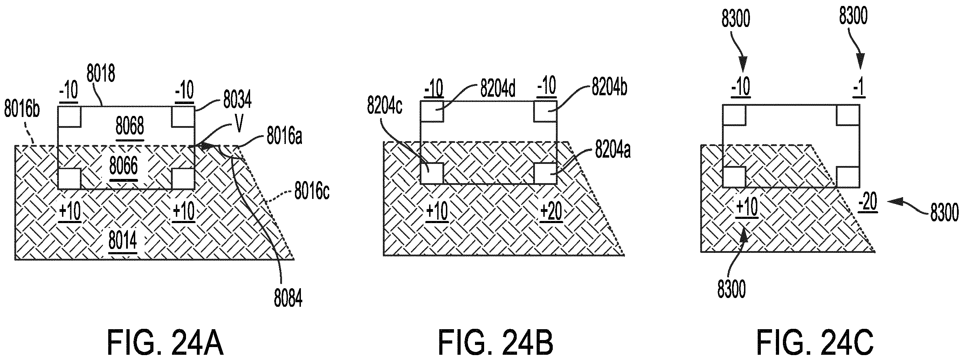

An inside turn is generally defined as a turn that is made inside the perimeter 8015 of the cutting area 8014 (e.g., the wire 8016 extends along the concave side of the corner 8016a; see FIGS. 21 and 23A-24C). To detect an inside turn, the controller 8030 is configured to recognize the following pattern of sensor outputs. First, the tool 8010 approaches the corner 8016a in a first direction V generally parallel to and straddling a leading segment 8016b of the boundary wire 8016. By doing so, the "exterior sensors" (e.g., the sensors 8204b, 8204d positioned on the outer perimeter side 8068 of the wire 8016) output a negative sensor value 8300 while the pair of "interior sensors" (e.g., the sensors 8204a, 8204c positioned on the inner perimeter side 8066 of the wire 8016) output a positive sensor value 8300 (see FIGS. 23A and 24A). As the first end 8034 of the body 8018 nears the corner 8016a, the front-interior sensor 8204a detects an increase in sensor output magnitude (e.g., more positive) - signifying the boundary wire 8016 is approaching from that side. Since the momentary increase in magnitude is present proximate the front-inner sensor 8204a, the controller 8030 can determine that an inside turn is present.

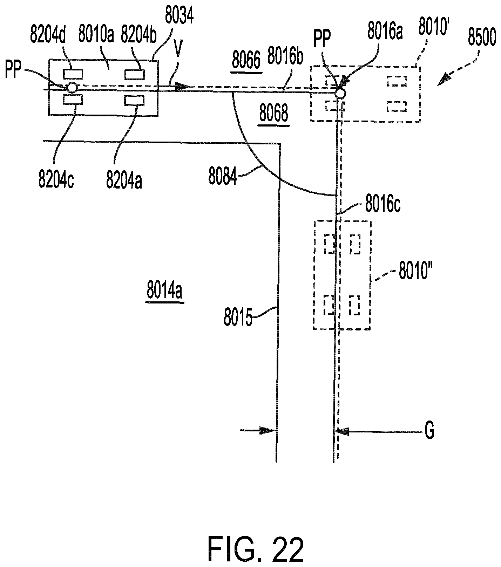

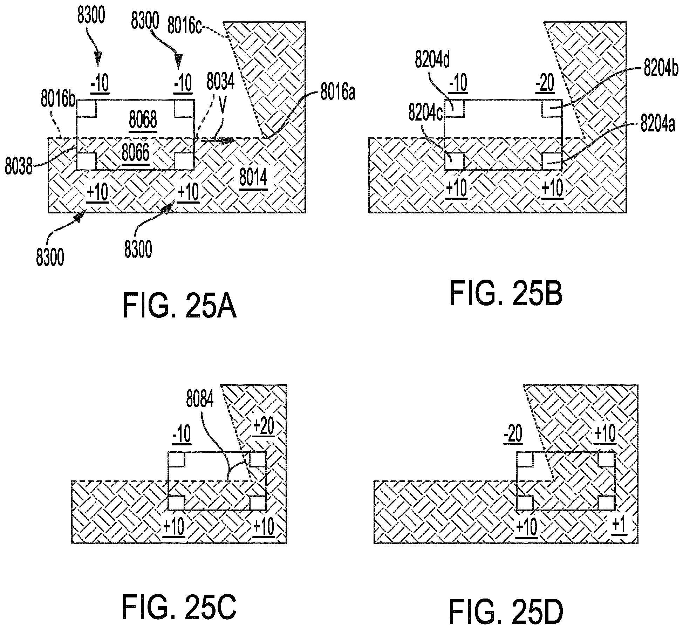

An outside turn is generally defined as a turn that is made on the outside of the perimeter 8015 of the cutting area 8014 (e.g., the wire 8016 extends along the convex side of a perimeter turn; see FIGS. 22 and 25A-25D). To detect an outside turn, the controller 8030 is configured to recognize the following pattern of sensor outputs. First, the tool 8010 approaches the corner 8016a along the leading segment 8016b in the same manner as described above. As the first end 8034 of the body 8018 nears the corner 80816a, the front outer sensor 8204b detects a momentarily increase in sensor output magnitude (e.g., more negative) - signifying the boundary wire 8016 is approaching from that side. Since the momentary increase in magnitude is present proximate the front-outer sensor 8204b, the controller 8030 can determine that an outside turn is present.

As indicated above, the controller 8030 is also configured to determine the size of the corresponding corner angle 8084. More specifically, the illustrated controller 8030 is configured to characterize whether the corner angle 8084 is greater than or less than 90 degrees. While the illustrated controller 8030 is configured characterize the corner angle 8084 in one of two 90-degree increments, it is understood that in other embodiments more or fewer sub-divisions of different increment sizes may also be used.

Still further, the controller may also be configured to monitor the outputs from the sensors 8204 over a pre-determined period of time as the tool 8010 approaches a corner 8016a creating a trendline for each individual sensor 8204 over that same period. The controller 8030 may then match those trendlines with pre-calculated examples and/or enter the trendlines into an algorithm to calculate the specific corner angle 8084 for a given turn. For example, the controller 8030 may be configured to identify the specific pattern and contour of each trendline both individually and/or as a comparison to the other sensor 8204 trendlines and calculate the specific position and corner angle 8084 of that corner based at least in part on the pattern and contour of the trendlines from each sensor 8204 over that predetermined period of time. For example, the controller 8030 may be configured to identify the rate at which the distance between a particular sensor 8204 and the boundary wire 8016 decreases for a given travel speed of the tool 8010 and determine the corner angle 8084 based at least in part on the detected rate.

To detect an inside corner 8016a having a corner angle 8084 less than 90 degrees, the controller 8030 is configured to recognize the following pattern of sensor signals. First, the tool 8010 approaches the corner 8016a along the leading segment 8016b in the same manner as described above (see FIG. 23A). As the first end 8034 of the body 8018 nears the corner 8016a, the front-interior sensor 8204a initially detects an increase in magnitude (e.g., from +10 units to +20 units, see FIG. 23B). Before the first end 8034 crosses corner 8016a, the front-interior sensor 8204a switches polarity as it crosses over the trailing segment 8016c of the boundary wire 8016 (e.g., from +20 units to -20 units, see FIG. 23C).

To detect an inside corner 8016a having a corner angle 8084 greater than 90 degrees, the controller 8030 is configured to recognize the following pattern of sensor signals. First, the tool 8010 approaches the corner 8016a along the leading segment 8016b in the same manner as described above (see FIG. 24A). As the first end 8034 of the body 8018 nears the corner 8016a, the front-interior sensor 8204a initially detects an increase in magnitude (e.g., from +10 units to +20 units, see FIG. 24B). After the first end 8034 travels beyond the corner 8016a, the front-interior sensor 8204a switches polarity as it crosses over the trailing segment 8016c of the boundary wire 8016 (e.g., from +20 units to -20 units, see FIG. 24C). As the front-interior sensor 8204a is switching polarity, the front-exterior sensor 8204b shrinks in magnitude (e.g., from -10 units to -1 unit)

To detect an outside corner 8016a having a corner angle 8084 less than 90 degrees, the controller 8030 is configured to recognize the following pattern of sensor signals. First, the tool 8010 approaches the corner 8016a along the leading segment 8016b in the same manner as described above (see FIG. 25A). As the first end 8034 of the body 8018 nears the corner 8016a, the front-exterior sensor 8204b initially detects an increase in magnitude (e.g., from -10 units to - 20 units, see FIG. 25B). Before the first end 8034 crosses corner 8016a, the front-exterior sensor 8204b switches polarity as it crosses over the trailing segment 8016c of the boundary wire 8016 (e.g., from -20 units to +20 units, see FIG. 25C). The first end 8034 of the tool 8010 then continues beyond the corner 8016a causing the two leading sensors 8204a, 8204b to both detect a drop in magnitude (e.g., from +10 units to +1 unit for sensor 8204a and from +20 units to +10 unit for sensor 8204b). The tool 8010 then proceeds beyond the corner 8016a causing the rear-exterior sensor 8204d to detect an increase in magnitude (e.g., from -10 units to -20 units, see FIG. 25D) just before the second end 8038 reaches the corner 8016a.

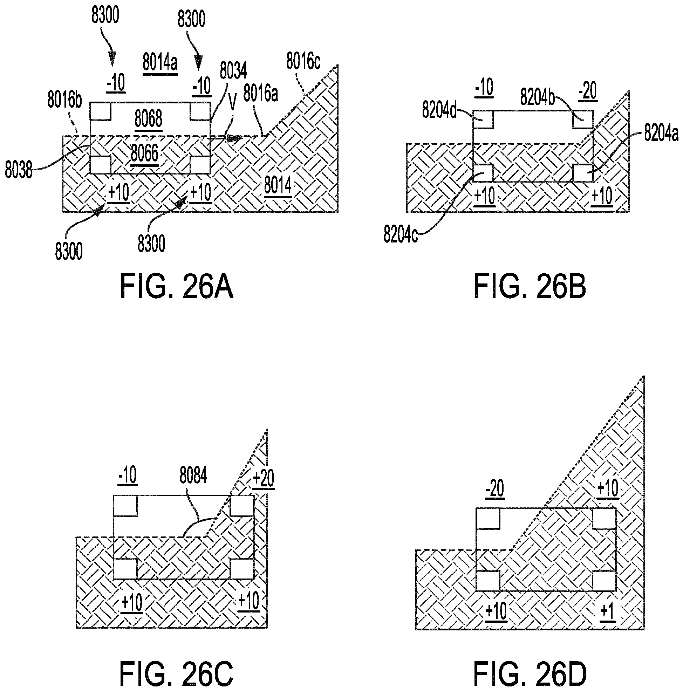

To detect an outside corner 8016a having a corner angle 8084 greater than 90 degrees, the controller 8030 is configured to recognize the following pattern of sensor signals. First, the tool 8010 approaches the corner 8016a along the leading segment 8016b in the same manner as described above (see FIG. 26A). As the first end 8034 of the body 8018 nears the corner 8016a, the front-exterior sensor 8204b initially detects an increase in magnitude (e.g., from -10 units to -20 units, see FIG. 26B). After the first end 8034 travels beyond the corner 8016a, the front-exterior sensor 8204b switches polarity as it crosses over the trailing segment 8016c of the boundary wire 8016 (e.g., from -20 units to +20 units, see FIG. 26C). The first end 8034 of the tool 8010 then continues beyond the corner 8016a causing the two leading sensors 8204a, 8204b to both detect a drop in magnitude (e.g., from +10 units to +1 unit for sensor 8204a and from +20 units to +10 units for sensor 8204b). The tool 8010 then proceeds beyond the corner 8016a until the rear-exterior sensor 8204d detects an increase in magnitude (e.g., from -10 units to -20 units, see FIG. 26D) just before the second end 8038 reaches the corner 8016a.

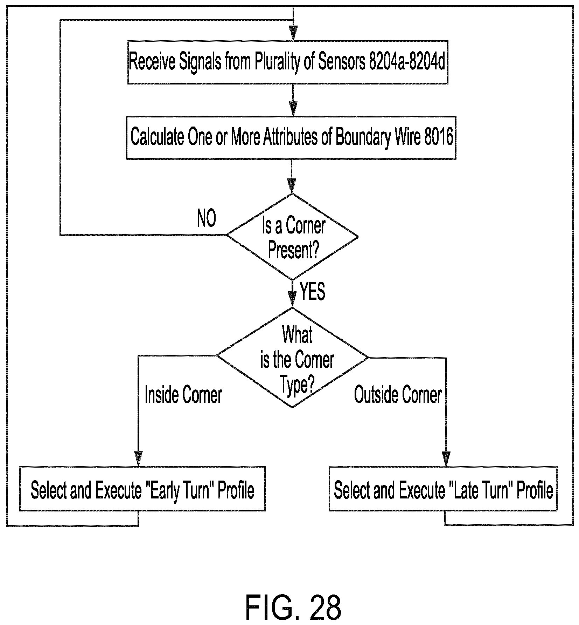

After the controller 8030 calculates the one or more attributes of the portion of the boundary wire 8016 immediately adjacent to the tool 8010, as described above, the controller 8030 is then configured to select and execute a turning profile based at least in part on the calculated attributes. More specifically, the controller 8030 includes a plurality of turning profiles 8400, 8500, 8600, 8700 saved in memory 8140 whereby the controller 8030 is configured to select the turning profile 8400, 8500, 8600, 8700 best suited for the upcoming corner 8016a and output signals to the driven wheels 8022c, 8022d to execute the selected profile 8400, 8500, 8600, 8700. For example, as shown in FIG. 28, the controller 8030 is configured to first classify whether a detected corner 8016a is an inside corner or an outside corner (e.g., the corner type). Once classified, the controller 8030 is then configured to select and execute one of two early turn profile 8400, 8600 for all inside corners and select and execute a late turn profile 8500 for all outside corners.

The controller 8030 is configured to select the turning profile 8400, 8500, 8600. 8700 that best keeps the tool 8010 within the cutting area 8014 through the turning process. By doing so, the boundary wire 8016 may be placed closer to the physical perimeter 8015 while still allowing the tool 8010 to operate (e.g., the gap G is minimized). Together, this minimizes the amount of untrimmed vegetation that remains proximate the perimeter 8015 after a cutting session. In the illustrated embodiment, the tool 8010 and turning profiles 8400, 8500, 8600, 8700 allow the gap G between the boundary wire 8016 and the perimeter 8015 to be no greater than 25 cm. In other embodiments, the gap G may be no greater than 22 cm, 20cm, or 15 cm.

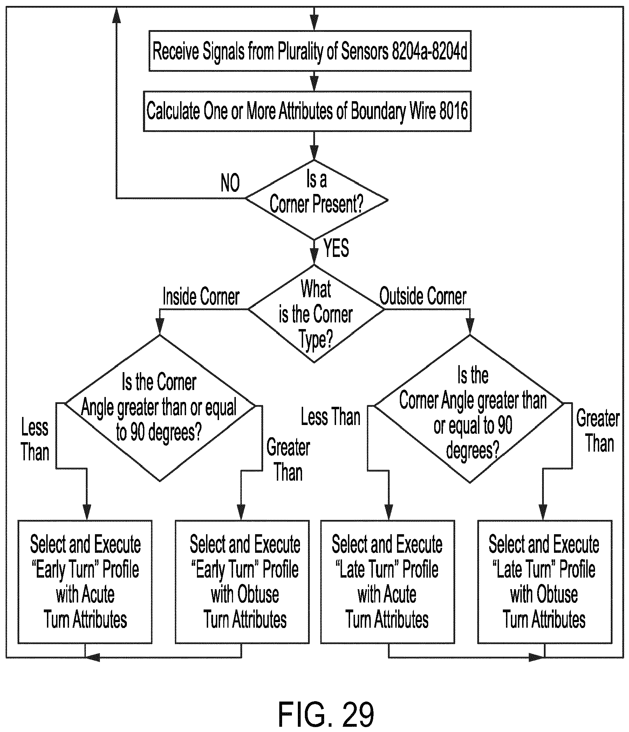

While the illustrated controller 8030 relies on corner type to classify the detected corner 8016a, in other embodiments the controller 8030 may take into account different or additional information when classifying the detected corner 8016a. For example, as shown in FIG. 29, other embodiments of the controller 8030 may be configured to classify the detected corner 8016a based at least in part on both the corner type and the size of the corner angle 8084. In such embodiments, the controller 8030 may select an overall turning profile 8400, 8500, 8600 based on the corner type (e.g., early vs. late turn profiles) and further alter the specific attributes of the selected turning profile based at least in part on the size of the corner angle 8084. For example, in addition to having the overall turn profiles 8400, 8500, 8600 saved in memory 8140, the controller 8030 may also have a plurality of turn attributes saved in memory 8140 as well. Such attributes included in these sets may include, but are not limited to, the turn radius 8222, the turn-in distance 8220, the travel speed of the tool 8010, and the like. In such embodiments, the controller 8030 may be configured to first select a turn profile (e.g., based on corner type) and subsequently insert the saved attributes into the turn profile (e.g., based on corner angle).

FIG. 21 illustrates an "early turn profile" 8400 having a first turn-in distance 8220 and a first turn radius 8222. To carry out an early turn 8400, the tool 8010 first approaches the corner 8016a in a first direction V generally parallel to and straddling the leading segment 8016b of the boundary wire 8016 with a pair of exterior sensors 8204b, 8204d positioned on the outer perimeter side 8068 of the wire 8016 and a pair of interior sensors 8204a, 8204c positioned on the inner perimeter side 8066 of the wire 8016.

Before the pivot point PP of the tool 8010 reaches the corner 8016a, the controller 8030 is configured to output a series of signals to the driven wheels 8022c, 8022d to begin turning the body 8018 relative to the leading segment 8016b in the direction of the turn (see tool 8010' of FIG. 21). The position of the pivot point PP when the turn is initiated is referred to as the turn-in point 8216. The controller 8030 then continues to output signals so that the tool 8010 continues producing a first turn radius 8222 until the tool 8010 has completed the turn and is traveling along and straddling the trailing segment 8016c of the barrier wire (see tool 8010" of FIG. 21).

The turn-in point 8216 of the early turn profile 8400 is positioned along the leading segment 8016b of the boundary wire 8016 and defines a turn-in distance 8220 between itself and the corner 8016a. In the illustrated embodiment, the controller 8030 may adjust the turn-in distance 8220 based at least in part on the parameters of the corner itself (e.g., the corner angle 8084 and/or the gap distance G at that particular location). For example, the tighter the turn (e.g., the smaller the corner angle 8084) the larger the turn-in distance 8220 while the wider the turn (e.g., the larger the corner angle 8084) the smaller the turn-in distance 8220. Furthermore, the turn-in distance 8220 may also be at least partially adjusted based on the relative dimensions of the body 8018 of the tool 8010 and the gap G between the wire 8016 and the perimeter 8015. For example, in some embodiments, the controller 8030 may be configured to position the turn-in point 8216 so that the sum of the turn-in distance 8220 and the gap G is no greater than 105% the turning length 8224 of the tool 8010 (e.g., the distance between the pivot point PP and the first end 8034). In still other embodiments, the sum of the turn-in distance 8220 and the gap G is no greater than 110%, 115%, 120%, and 150% of the turning length 8224 of the tool 8010. In still other embodiments, the sum of the turn-in distance 8220 and the gap G is no greater than 105%, 110%, 115%, 120% and 150% of the overall longitudinal length of the tool 8010 measured parallel to the longitudinal axis 8050.

Furthermore, the turn-in point 8216 also defines an ideal cutting radius CR and a driven cutting radius DR. The ideal cutting radius includes the sum of the length of the turn-in distance 8220 and the gap G (e.g., CR=220+G). In contrast the driven cutting radius DR is equal to the turning length 8224 of the tool 10 (e.g., DR = 224). In the illustrated embodiment, the turn-in point 8216 is positioned such that the ratio of the ideal cutting radius CR to the actual cutting radius DR is no less than 0.75 (e.g., DR/CR ≥ 0.75). In other embodiments, the ratio of the ideal cutting radius CR to the actual cutting radius DR is no less than 0.8 or 0.9.

The turn radius 8222 may also be adjusted by the controller 8030 based at least in part on the parameters of the corner 8016a itself. For example, tight turns may require smaller turn radii while wider turns may permit larger turn radii.

FIG. 22 illustrates a "late spot turn profile" 8500. To carry out a late turn 8500, the tool 8010 first approaches the corner 8016a in a first direction V generally parallel to and straddling the leading segment 8016b of the boundary wire 8016 with a pair of exterior sensors 8204b, 8204d positioned on the outer perimeter side 8068 of the wire and a pair of interior sensors 8204a, 8204c positioned on the inner perimeter side 8066 of the wire 8016.

The tool 8010 continues to travel in the first direction V until the pivot point PP of the tool 8010 is aligned with the corner 8016a. Once aligned, the controller 8030 then outputs a series of signals to the driven wheels 8022c, 8022d causing the tool 8010 to pivot about the pivot point PP an angular amount corresponding to the corner angle 8084 (e.g., conduct a spot turn). Once the tool 8010 is aligned with the trailing segment 8016c of the corner, the tool 8010 then continues along the trailing segment 8016c.

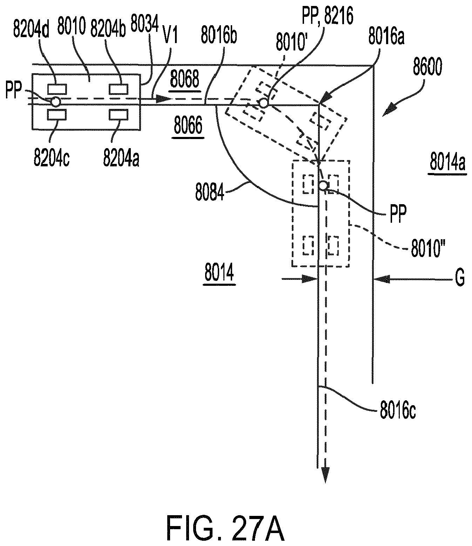

FIGS. 27A-27C illustrate another embodiment of an early turn profile 8600. To carry out the second embodiment of the early turn profile 8600, the tool 8010 first approaches the corner 8016a in a first direction V generally parallel to and straddling the leading segment 8016b of the boundary wire 8016 with a pair of exterior sensors 8204b, 8204d positioned on the outer perimeter side 8068 of the wire and a pair of interior sensors 8204a, 8204c positioned on the inner perimeter side 8066 of the wire 8016.

Before the pivot point PP of the tool reaches the corner 8016a, the controller 8030 is configured to output a series of signals to the driven wheels 8022c, 8022d to begin turning the body 8018 relative to the leading segment 8016b in the direction of the turn at the turn-in point 8216 (see tool 8010' of FIG. 27A). The controller 8030 then continues to output signals to the driven wheels 8022c, 8022d until the tool 8010 has completed the turn and is straddling the trailing segment 8016c of the boundary wire 8016 (see tool 8010" of FIG. 27A).

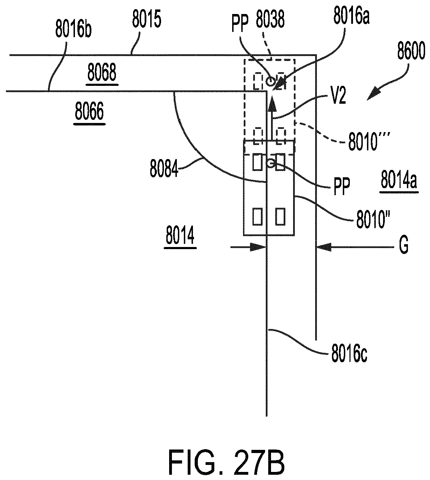

With the initial turn complete, the controller 8030 then outputs signals to the driven wheels 8022c, 8022d so that the tool 8010 travels in a second direction V2 opposite the first direction V1 (e.g., in reverse toward the second end 8038). The tool 8010 then travels in the second direction V2 until the second end 8038 is proximate the perimeter 8015 (see tool 8010‴ of FIG. 27B). More specifically, the tool 8010 is generally considered proximate the perimeter 8015 when the rear bumper sensor is triggered (e.g., by contacting the perimeter 8015 in some way), and/or when both rear boundary wire sensors 8402c, 8402d are beyond the leading segment 8016b of the boundary wire. In still other embodiments, the tool 8010 may be able to calculate the distance the rear boundary wire sensors 8402c, 8402d are behind the leading segment 8016b such that the tool 8010 is considered proximate the perimeter when the rear sensors 8402c, 8402d are behind the leading segment 8016b a distance generally corresponding to the gap G.

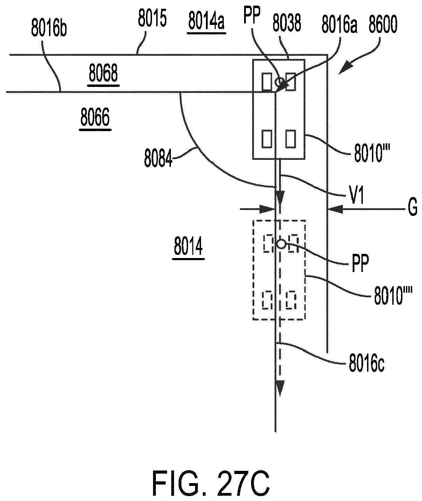

After the second end 8038 is positioned proximate the perimeter 8015, the controller 8030 then outputs signals to the driven wheels 8022c, 8022d so that the tool 8010 begins traveling in the first direction V1 (e.g., forward toward the first end 8034, see tool 8010ʺʺ of FIG. 27C). The tool 8010 then continues to travel parallel to and straddling the trailing segment 8016c.

In some embodiments, the controller 8030 is also configured to operate in a calibration mode to align the sensors 8204a-8204d of the tool 8010 with the electromagnetic field 8208 of the boundary wire 8016. In such the calibration mode, the controller 8030 may also be in operable communication with a user interface 8228. The user interface 8228, in turn, may include a separate device (e.g., a cellphone, laptop, or the like, not shown) or be integrated directly into some portion of the boundary wire 8016 directly (e.g., a charging station and the like).

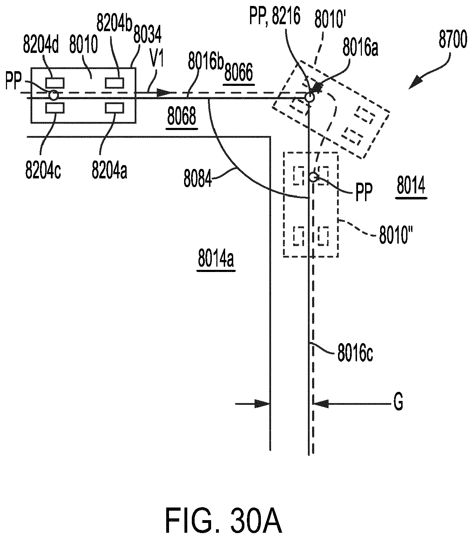

FIGS. 30A-30C illustrate another embodiment of a late turn profile 8700. To carry out the second embodiment of the late turn profile 8700, the tool 8010 first approaches the corner 8016a in a first direction V generally parallel to and straddling the leading segment 8016b of the boundary wire 8016 with a pair of exterior sensors 8204b, 8204d positioned on the outer perimeter side 8068 of the wire and a pair of interior sensors 8204a, 8204c positioned on the inner perimeter side 8066 of the wire 8016.

The tool 8010 continues to travel in the first direction V until the pivot point PP of the tool 8010 is aligned with the corner 8016a. Once aligned, the controller 8030 is configured to output a series of signals to the driven wheels 8022c, 8022d to begin turning the body 8018 relative to the leading segment 8016b in the direction of the trailing segment 8016c while continuing to travel in a forward direction (see tool 8010' of FIG. 30A). The controller 8030 then continues to output signals to the driven wheels 8022c, 8022d until the tool 8010 has completed the turn and is straddling the trailing segment 8016c of the boundary wire 8016 (see tool 8010" of FIG. 30A).

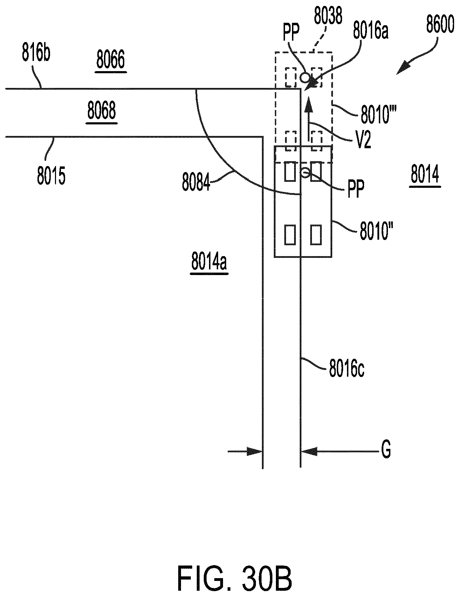

With the initial turn complete, the controller 8030 then outputs signals to the driven wheels 8022c, 8022d so that the tool 8010 travels in a second direction V2 opposite the first direction V1 (e.g., in reverse toward the second end 8038). The tool 8010 then travels in the second direction V2 until the second end 8038 crosses over the leading segment 8016b (see tool 8010‴ of FIG. 30B). More specifically, the tool 8010 is generally considered to have crossed over the leading segment 8016b when both rear boundary wire sensors 8402c, 8402d are beyond the leading segment 8016b of the boundary wire. In still other embodiments, the tool 8010 may be able to calculate the distance the rear boundary wire sensors 8402c, 8402d are behind the leading segment 8016b such that the tool 8010 is considered to have crossed over the leading segment 8016b when the rear sensors 8402c, 8402d are behind the leading segment 8016b a pre-determined distance. Still further, the tool 8010 may be instructed to travel in the second direction V2 until the cutting assembly 8026 physically crosses over the leading segment 8016b or until the cutting assembly 8026 intersects and overlaps with already existing cut regions of vegetation.

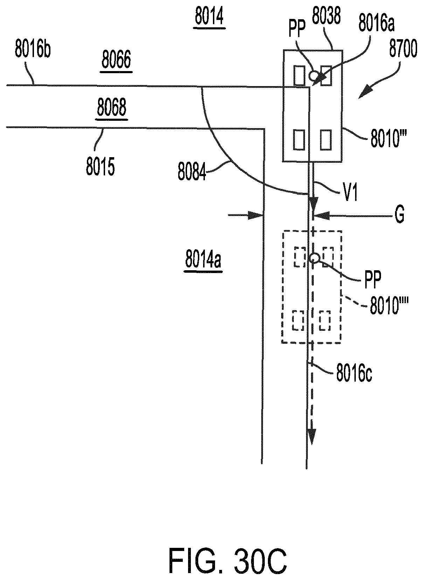

After the second end 8038 is positioned proximate the perimeter 8015, the controller 8030 then outputs signals to the driven wheels 8022c, 8022d so that the tool 8010 begins traveling in the first direction V1 (e.g., forward toward the first end 8034, see tool 8010ʺʺ of FIG. 30C). The tool 8010 then continues to travel parallel to and straddling the trailing segment 8016c.

In some embodiments, the controller 8030 is also configured to operate in a calibration mode to align the sensors 8204a-8204d of the tool 8010 with the electromagnetic field 8208 of the boundary wire 8016. In such the calibration mode, the controller 8030 may also be in operable communication with a user interface 8228. The user interface 8228, in turn, may include a separate device (e.g., a cellphone, laptop, or the like, not shown) or be integrated directly into some portion of the boundary wire 8016 directly (e.g., a charging station and the like).

During the calibration process, the user interface 8228 is configured to communicate with the controller 8030 to indicate to the controller 8030 the current flow direction A (e.g., clockwise, counterclockwise) of the boundary wire 8016. As described above, by knowing the current flow direction A the controller 8030 is able to determine the orientation of the electromagnetic field 8208 both inside and outside of the cutting area 8014. For example, if the interface 8228 informs the controller 8030 that the current flow direction A is counterclockwise (see FIG. 15), the controller 8030 can deduce that any sensor 8204a-8204d positioned within the cutting area 8014 will output a positive signal. In contrast, if the interface 8228 informs the controller 8030 that the current flow direction A is clockwise, the controller can deduce that any sensor 8204a-8204d that is positioned within the cutting area 8014 will output a negative signal.

In another embodiment, the calibration may be configured so that the user interface 8228 asks the user to input whether the tool 8010 is currently positioned inside or outside the lawn area. By doing so, the controller 8030 is able to deduce that the current polarity represents either inside or outside the cutting area. For example, if the tool 8010 is positioned within the cutting area and experiences a negative polarity, the controller 8030 will deduce that negative polarity should be associated with inside the cutting area while positive polarity should be associated with outside the cutting area.

Although aspects of the disclosure have been described in detail with reference to certain preferred embodiments, variations and modifications exist within the scope and spirit of one or more independent aspects as described.

## Claims

1. A robotic garden tool for use with a boundary wire producing an electromagnetic field, the robotic garden tool comprising:
a body defining a first end, a second end opposite the first end, a first side extending between the first end and the second end, and a second side extending between the first end and the second end opposite the first side, and wherein the body includes a longitudinal axis extending centrally through the body and passing through both the first end and the second end;
one or more wheels coupled to the body;
a working tool coupled to the body;
a first sensor set coupled to the body, wherein the first sensor set includes:
a first sensor configured to detect the orientation and magnitude of the electromagnetic field along a first detection axis and output a signal representative thereof, wherein the first sensor is positioned between the longitudinal axis and the first side of the body, and
a second sensor configured to detect the orientation and magnitude of the electromagnetic field along a second detection axis and output a signal representative thereof, wherein the second sensor positioned between the longitudinal axis and the second side; and
a controller in operable communication with the first sensor set, wherein the controller is configured to determine the relative location of the boundary wire with respect to the first sensor set based at least in part on the signals output by the first and second sensors.

2. The robotic garden tool of claim 1, wherein the first sensor set defines a first set region between the first sensor and the second sensor, and wherein the controller is configured to determine whether the wire is positioned within the first set region.

3. The robotic garden tool of claim 2, wherein the first set region is oriented perpendicular to the longitudinal axis.

4. The robotic garden tool of claim 1, wherein the first sensor and the second sensor are both mounted in the vertical orientation.

5. The robotic garden tool of claim 1, wherein the body defines a central axis perpendicular to the longitudinal axis, and wherein both the first detection axis and the second detection axis are oriented parallel to the central axis.

6. The robotic garden tool of claim 1, further comprising a second sensor set coupled to the body, wherein the second sensor set includes:
a third sensor configured to detect the orientation and magnitude of the electromagnetic field along a third detection axis and output a signal representative thereof, wherein the third sensor is positioned between the longitudinal axis and the first side of the body, and
a fourth sensor configured to detect the orientation and magnitude of the electromagnetic field along a fourth detection axis and output a signal representative thereof, wherein the fourth sensor positioned between the longitudinal axis and the second side.

7. The robotic garden tool of claim 6, wherein the first sensor set is proximate the first end of the body and wherein the second sensor set is positioned proximate the second end of the body.

8. The robotic garden tool of claim 6, wherein the first, second, third, and fourth sensors are all mounted to the body in a vertical orientation.

9. The robotic garden tool of claim 1, wherein at least one of the first sensor and the second sensor are mounted to the body in a vertical orientation, and wherein the other of the first sensor and the second sensor are mounted to the body in a horizontal orientation.

10. The robotic garden tool of claim 1, wherein the first sensor set further includes a third sensor configured to detect the orientation and magnitude of the electromagnetic field along a third detection axis, wherein the third sensor is positioned between the first sensor and the second sensor.

11. The robotic garden tool of claim 10, wherein the first sensor and the second sensor are mounted in a vertical orientation, and wherein the third sensor is mounted in a horizontal orientation.

12. The robotic garden tool of claim 10, wherein the third sensor is positioned on the longitudinal axis.

13. A robotic garden tool for use with a boundary wire producing an electromagnetic field, the robotic garden tool comprising:
a body defining a first end, a second end opposite the first end, a first side extending between the first end and the second end, and a second side extending between the first end and the second end opposite the first side, and wherein the body includes a longitudinal axis extending centrally through the body and passing through both the first end and the second end;
one or more wheels coupled to the body;
a working tool coupled to the body;
a first sensor set coupled to the body, wherein the first sensor set includes:
a first sensor configured to detect the orientation and magnitude of the electromagnetic field along a first detection axis and output a signal representative thereof,
a second sensor configured to detect the orientation and magnitude of the electromagnetic field along a second detection axis and output a signal representative thereof, and
wherein the first sensor and the second sensor define a first set region therebetween, and wherein at least 90% of the first set region is positioned on one side of the longitudinal axis; and
a controller in operable communication with the first sensor set, wherein the controller is configured to determine the relative location of the boundary wire with respect to the first sensor set based at least in part on the signals output by the first and second sensors.

14. The robotic garden tool of claim 13, wherein both the first sensor and the second sensor are positioned on the same side of the longitudinal axis.

15. The robotic garden tool of claim 13, wherein both the first sensor and the second sensor are mounted vertically to the body.

16. The robotic garden tool of claim 13, wherein the controller is configured to determine whether the boundary wire passes through the first set region.

17. The robotic garden tool of claim 13, further comprising a second sensor set coupled to the body, wherein the second sensor set includes:
a third sensor configured to detect the orientation and magnitude of the electromagnetic field along a third detection axis and output a signal representative thereof,
a fourth sensor configured to detect the orientation and magnitude of the electromagnetic field along a fourth detection axis and output a signal representative thereof, and
wherein the third sensor and the fourth sensor define a second set region therebetween, and wherein at least 90% of the second set region is positioned on one side of the longitudinal axis.

18. The robotic garden of claim 17, wherein the first sensor set if positioned proximate the first end and wherein the second sensor set if positioned proximate the second end.

19. The robotic garden tool of claim 13, wherein the first sensor set includes a third sensor configured to detect the orientation and magnitude of the electromagnetic field along a third detection axis, and wherein the third sensor is positioned between the first sensor and the second sensor.

20. The robotic garden tool of claim 19, wherein the first an second sensors are mounted to the body in a vertical orientation, and wherein the third sensor is mounted to the body in a horizontal orientation.
